# EUROPÄISCHE PATENTSCHRIFT

(11) **EP 3 774 420 B1**
(45) Veröffentlichungstag und Bekanntmachung des Hinweises auf die Patenterteilung: **04.05.2022**
(21) Anmeldenummer: 19717752.0
(22) Anmeldetag: 26.03.2019
(51) Int. Cl.: B60J 7/06

(54) **ÖFFNUNGSFÄHIGER AUFBAU FÜR EINEN UNTERBAU**
OPENABLE OVERHEAD CONSTRUCTION FOR A SUBSTRUCTURE
CONSTRUCTION OUVRABLE POUR UNE SOUS-STRUCTURE

(30) Priorität: 27.03.2018 DE 202018101713 U; 20.08.2018 DE 202018104780 U
(43) Veröffentlichungstag der Anmeldung: 17.02.2021
(73) Patentinhaber: European Trailer Systems GmbH, 47441 Moers (DE)
(72) Erfinder: REMMEL, Roger, 42897 Remscheid (DE); LEUKERS, Markus, 47546 Kalkar (DE); BIESENBRUCK, Volker, 46459 Rees (DE)
(74) Vertreter: IPrime Bonnekamp Sparing Patentanwaltsgesellschaft mbH
(86) Internationale Anmeldenummer: PCT/DE2019/100287
(87) Internationale Veröffentlichungsnummer: WO 2019/185093

(56) Entgegenhaltungen:
- DE-A1- 1 430 628
- DE-A1- 4 007 937
- DE-A1-102012 017 897
- US-A- 5 546 972
- US-A1- 2002 113 456

## Beschreibung

Die Erfindung betrifft einen öffnungsfähigen Aufbau für einen Unterbau, wie einen Lastkraftwagen, Anhänger, Auflieger, Bahnwaggon, Muldenkipper, Container oder dergleichen.

Aus der Praxis sind öffnungsfähige Aufbauten für Unterbauten verschiedenster Bauweise bekannt, die entweder transportabel sind, wie beispielsweise Lastkraftwagen, Anhänger, Auflieger, Bahnwaggons, Muldenkipper oder Container, oder die auch ortsfest sind, wie beispielsweise Carports, Schwimmbäder, Häuser oder dergleichen. Die bekannten Aufbauten umfassen ein Verdeckgestell, an dem beispielsweise eine Plane aus wetterbeständigem Material oder eine Mehrzahl gelenkig koppelbarer Wandungselemente, die im geschlossenen Zustand eine zumindest überwiegend geschlossene Wandung, wie ein Dach oder eine Seitenwand, ausbilden, anschließbar ist, wobei das Verdeckgestell eine Mehrzahl von Schlitten aufweist, die entlang wenigstens einer Führung verlagerbar sind. Die Führung umfasst hierbei ein Längsträgerglied, entlang dem die Schlitten verlagerbar sind, wobei das Längsträgerglied selbst eine hohe Steifigkeit ausweist. Wird das Verdeckgestell zum Öffnen des Aufbaus nun entlang von Längsträgergliedern verlagert, ist es erforderlich, dass zum Überwinden von Toleranzen oder von plastischen Deformationen eines von Verdeckgestell und Längsträgerglied in der Lage ist, zum Ausgleich nachzugeben. Nachteilig bei dem aus der Praxis bekannten öffnungsfähigen Aufbauten ist jedoch, dass das nachgebende Bauteil, wahlweise ein Holm des Verdeckgestells oder das Längsträgerglied, entsprechend schwach dimensioniert sein muss, was zu vorzeitigem Verschleiß oder sogar zum Bruch führen kann.

DE 35 40 128 A1 beschreibt ein als Schiene für ein Schienenfahrzeug ausgebildetes Längsträgerglied, welches einen sich nach unten verjüngenden Bereich aufweist, der von einem Schraubenbolzen durchsetzt ist, welcher in das Längsträgerglied seitlich begrenzenden Begrenzungsflächen festgelegt ist. Der Bereich zwischen den Begrenzungsflächen und dem Längsträgerglied ist mit elastischen Zwischenlagen ausgefüllt.

DE 1 430 628 A beschreibt einen öffnungsfähigen Aufbau für einen Unterbau, wobei der Aufbau ein Verdeckgestell umfasst, an dem eine Plane anschließbar ist. Das Verdeckgestell umfasst eine Mehrzahl von Schlitten, die jeweils entlang einer als Längsträgerglied ausgebildeten Führung verlagerbar sind, wobei gegenüberliegende Schlitten mittels eines Holms miteinander gekoppelt sind. Der Schlitten ist als Wagen mit vier Tragrollen und zwei Führungsrollen ausgebildet, wobei die Führungsrollen seitlich von Schenkelflanschen der Führung in dieser zentriert werden. Das Verdeckgestell ermöglicht ein Öffnen und Schließen des Aufbaus, ohne dass die benachbarten Schlitten miteinander verbunden sind, dadurch, dass der Holm eine im Wesentlichen punktuelle vertikale Belastung in den Schlitten einleitet. Das Längsträgerglied umfasst mehrere Teilstücke, die über auf Ständern angeordneten Tragstücken und Verbindungsstücken horizontal fixiert sind. Der Ständer ist in einem Träger in diskreten Schritten von Hand höhenverstellbar festlegbar und ermöglicht verschiedene vertikale Positionen des Längsträgerglieds, wobei die Einstellung nicht durch das Verlagern der Schlitten erreicht wird. Nachteilig bei dem bekannten Aufbau ist insbesondere, dass die Holme mit den Schlitten zum Verkanten neigen, wenn die Kraft zur Verlagerung einseitig angreift.

Es ist die Aufgabe der Erfindung, einen öffnungsfähigen Aufbau anzugeben, der ein leichtgängiges Öffnen und Schließen des Aufbaus zulässt.

Diese Aufgabe wird erfindungsgemäß durch einen öffnungsfähigen Aufbau mit den Merkmalen eines unabhängigen Anspruchs gelöst.

Gemäß einem Aspekt der Erfindung ist ein öffnungsfähiger Aufbau für einen Unterbau wie einen Lastkraftwagen, Anhänger, Auflieger, Bahnwaggon, Muldenkipper, Container oder dergleichen geschaffen, umfassend ein Verdeckgestell, an dem beispielsweise eine Plane aus wetterbeständigem Material oder eine Mehrzahl gelenkig koppelbarer Wandungselemente anschließbar ist, wobei das Verdeckgestell eine Mehrzahl von Schlitten aufweist, die entlang wenigstens einer Führung verlagerbar sind, wobei die Führung ein Längsträgerglied umfasst, entlang dem die Schlitten verlagerbar sind. Der öffnungsfähige Aufbau zeichnet sich dadurch aus, dass das Längsträgerglied zumindest abschnittsweise in einer Richtung quer zu der Verlagerungsrichtung der Schlitten verstellbar angeordnet ist. Hierdurch wird vorteilhaft ein öffnungsfähiger Aufbau geschaffen, bei dem das Längsträgerglied quer, vorzugsweise senkrecht zu der Verlagerungsrichtung der Schlitten auf das korrespondierende Abstandsmaß der Schlitten angepasst werden kann, so dass Spiel und Toleranzen ausgeglichen werden. Darüber hinaus können durch Beschädigung oder Deformation des Unterbaus eintretende Maßänderungen ausgeglichen werden. Des Weiteren lässt sich im Falle des Verkantens des Verdeckgestell dieses durch ein leichtes Nachgeben der Längsträgerglieder in der Richtung quer zu der Verlagerungsrichtung leichter lösen. Schließlich können vorteilhaft auch Bauteile unterschiedlicher Hersteller eingesetzt werden, die sich in ihren Toleranzen unterscheiden.

Zweckmäßigerweise ist das Längsträgerglied ein langgestrecktes Profil, wie zum Beispiel eine Schiene, entlang dem die Schlitten entlang gleiten oder, wenn sie mit Rollen versehen sind, entlang rollen können. Die Erstreckung des Längsträgergliedes definiert hierbei die Verlagerungsrichtung der Schlitten.

Gemäß einer bevorzugten Ausgestaltung ist vorgesehen, dass die Führung einen Tragrahmen umfasst, in oder an dem das Längsträgerglied vorzugsweise aufgenommen ist. Der Tragrahmen begrenzt hierbei vorteilhaft die Beweglichkeit des Längsträgergliedes in zumindest eine Richtung, und ist bezüglich der Beweglichkeit des Längsträgergliedes vorzugweise auch ein Lager für das Längsträgerglied. Der Tragrahmen kann aus einem Teil gebildet sein, es ist aber möglich, den Tragrahmen aus mehreren Teilen zusammenzusetzen.

In vorteilhafter Weiterbildung ist vorgesehen, dass das eine von Unterbau und Längsträgerglied mit dem Tragrahmen verbunden ist, während das jeweils andere von Unterbau und Längsträgerglied in eine Richtung quer und vorzugsweise senkrecht zu der Verlagerungsrichtung der Schlitten verstellbar mit dem Tragrahmen gekoppelt ist. Der Tragrahmen kann somit in zwei wesentlichen Verwirklichungsformen realisiert werden: Einmal als mit dem Unterbau fest (oder auch beweglich) verbundenes Teil, wobei der Tragrahmen dann wiederum das Längsträgerglied verschieblich lagert. Zum anderen als mit dem Längsträgerglied fest (oder auch beweglich) verbundenes Teil, das an dem Unterbau verschieblich gelagert ist. Der Tragrahmen kann hierbei eine tragende Funktion in dem Sinne aufweisen, dass er die Last des Längsträgerglieds aufnimmt, muss dies aber nicht. Der Tragrahmen kann hierbei eine einrahmende Funktion in dem Sinne aufweisen, dass das Längsträgerglied eingerahmt oder eingefasst ist, aber auch dies ist nicht zwingend der Fall. Schon gar nicht müssen die beiden Funktionen gleichzeitig verwirklicht sein.

In einer anderen günstigen Ausgestaltung kann auch eine unmittelbare Lagerung des Längsträgerglieds an dem Unterbau erfolgen: So können an dem Unterbau oder an dem Längsträgerglied beispielsweise Führungsvorsprünge ausgebildet oder angeschlossen sein, die eine relative Verlagerung des anderen Teils beispielsweise mittels Führungsausnehmungen ermöglichen. Die Führungsvorsprünge können beispielsweise als zylindrische oder prismatische Bolzen oder als Schwalbenschwanzführungen ausgebildet sein, oder als Lenker bzw. Lenkergetriebe.

Eine kostengünstige Nachrüstung ergibt sich dann, wenn der Tragrahmen an dem Unterbau verstellbar angeschlossen ist. Hierbei kann der bestehende Unterbau praktisch unverändert genutzt werden, während der Tragrahmen, vorzugsweise mit daran beweglich oder starr angeschlossenem Längsträgerglied, verstellbar an den Unterbau angeschlossen wird. Eine einfache Verwirklichung sieht beispielsweise vor, dass in dem Unterbau ganz oder teilweise durchgehende Bohrungen eingebracht werden, und dass ein Bolzen des Tragrahmens mit dem Tragrahmen in diesen Bohrungen verstellbar ist. Alternativ können auch Bolzen auf den Unterbau geschraubt oder geschweißt werden, und der Tragrahmen ist entlang dieser Bolzen verstellbar. Alternativ kann der Tragrahmen auch über ein Lenkergetriebe, z.B. eine Viergelenkanordnung, oder eine Pendeleinrichtung oder Keilrampen an den Unterbau angeschlossen sein.

Der Tragrahmen weist zweckmäßigerweise eine flache Basis auf, auf der das Längsträgerglied vorzugsweise aufliegt. Es ist aber möglich, die Basis des Tragrahmens V-förmig auszubilden, so dass das Längsträgerglied sich unter dem Einfluss seiner Masse zu dem tiefsten Punkt des V-förmigen Profils hin zentriert.

Zweckmäßigerweise ist der Tragrahmen an dem Unterbau oder an dem Längsträgerglied festgelegt oder mit diesem gemeinsam ausgebildet, beispielsweise an der Oberkante einer Wandung eines Unterbaus. Hierbei kann der Tragrahmen sowohl an den Unterbau angeschraubt sein als auch mit dem Unterbau in anderer Weise, beispielsweise durch Verschweißen oder Vernieten, fest verbunden sein. Der Tragrahmen bildet zweckmäßigerweise für die Beweglichkeit des Längsträgergliedes in wenigstens eine Richtung wenigstens einseitig, zweckmäßigerweise aber für zwei Seiten eine Begrenzung. Darüber hinaus kann vorteilharft vorgesehen sein, dass der Tragrahmen auch eine Begrenzung in eine weitere Dimension bildet. Ist der Tragrahmen an dem Längsträgerglied festgelegt, bilden diese eine gemeinsam verlagerbare Baueinheit, wobei das Längsträgerglied zweckmäßig die Schlitten abstützt und deren Kräfte in den Tragrahmen für eine Verlagerung der beiden Teile an dem Unterbau einleitet.

Eine besonders günstige Ausführungsform zeichnet sich dadurch aus, dass der Tragrahmen mit dem Längsträgerglied oder mit dem Unterbau über ein eine Relativbewegung zulassendes Koppelteil verbunden ist. Hierdurch wird vorteilhaft erreicht, dass das Koppelteil zum einen das Längsträgerglied mit dem Tragrahmen verbindet, zum anderen aber eine Relativbewegung in zumindest eine Ausweichrichtung des Längsträgergliedes quer zu seiner Haupterstreckung zulässt.

Gemäß einer ersten bevorzugten Ausgestaltung ist vorgesehen, dass das Koppelteil ein Bolzen ist, der an dem Tragrahmen festgelegt ist und entlang dem das Längsträgerglied verstellbar ist. Hierbei ist der Bolzen zweckmäßigerweise spielfrei an dem Tragrahmen festgelegt, beispielsweise vernietet oder verschraubt, beispielsweise mittels einer Mutter, so dass der Bolzen und der Tragrahmen eine Baueinheit bilden. Das Längsträgerglied weist hierbei Bohrungen auf, die von dem Bolzen durchsetzt werden, wobei die Bohrungen entlang des zweckmäßig zylindrisch ausgebildeten Außenumfangs des Bolzens hin und her verschoben werden können.

Gemäß einer weiteren vorteilhaften Gestaltung ist das Koppelteil als Lenker ausgebildet, der gelenkig mit dem Tragrahmen und gelenkig mit dem Längsträgerglied verbunden ist, so dass der Lenker den Tragrahmen mit dem Längsträgerglied verbindet und damit sicherstellt, dass das Längsträgerglied nicht aus dem Tragrahmen heraus verbracht werden kann.

Gemäß einer ersten vorteilhaften Ausführung ist hierbei vorgesehen, dass der Lenker horizontal angeordnet ist oder sich jedenfalls horizontal erstreckt und um jeweils vertikale Achsen verschwenkbar ist. In diesem Fall ermöglicht der Lenker eine leichte Pendelbewegung des Längsträgergliedes um den Tragrahmen, wobei gemäß einer günstigen Weiterbildung vorgesehen ist, dass wenigstens zwei Lenker den Tragrahmen und das Längsträgerglied miteinander koppeln, so dass eine Art Parallelogrammführung vorgesehen ist. Alternativ kann in dem Längsträgerglied und/oder in dem Tragrahmen auch ein von einem Zapfen des jeweils anderen Teils durchsetztes Langloch vorgesehen sein, das die Verstellung des Längsträgerglieds zusätzlich zentriert.

Gemäß einer ersten Ausführungsform ist vorgesehen, dass der Lenker horizontal angeordnet ist und um jeweils vertikale Achsen verschwenkbar ist. In diesem Fall ist der Lenker einen Ends an dem Längsträgerglied und anderen Ends an dem Tragrahmen schwenkbar angeschlossen und lässt eine Bewegung des Längsträgerglieds im Wesentlichen quer zu den Achsen, jedoch nicht in Richtung der Achsen der Anlenkung zu.

Gemäß einer anderen Ausführungsform ist vorgesehen, dass der Lenker vertikal angeordnet ist und um jeweils horizontale Achsen an dem Tragrahmen und an dem Längsträgerglied verschwenkbar ist. In diesem Fall umfasst die Verstellrichtung des Längsträgerglieds eine vertikale und eine horizontale Komponente.

Gemäß einer weiteren bevorzugten Ausgestaltung ist vorgesehen, dass das Koppelteil ein an einem von Tragrahmen und Längsträgerglied vorgesehener Vorsprung ist, der in einer Nut des anderen von Tragrahmen und Längsträgerglied verschiebbar eingesetzt ist. Der Vorsprung kann hierbei mit Tragrahmen und/oder dem Längsträgerglied einstückig oder alternativ mehrteilig ausgeführt sein, wobei die Verbindung mit dem einen Teil fest ist, so dass das als Vorsprung ausgebildete Koppelteil gemeinsam mit dem Tragrahmen oder dem Längsträgerglied in der Nut des jeweils anderen Teils mit definierter Verstellrichtung verschiebbar ist. Zweckmäßigerweise ist der Vorsprung an der Unterseite des einen Teils vorgesehen, und die Nut in der die Unterseite lagernden Fläche des anderen Teils.

Gemäß einer anderen günstigen Ausgestaltung ist vorgesehen, dass das Koppelteil ein an einem von Tragrahmen und Längsträger vorgesehenes Rollelement oder Gleitelement ist, beispielsweise eine an dem Längsträgerglied gelagerte Anzahl von Rollen, die auf einer Rollfläche des Tragrahmens, vorzugsweise in speziellen Bahnen, abrollen kann, so dass sich das Längsträgerglied in einer zweckmäßigerweise horizontalen Ebene und senkrecht zu der Erstreckung von Tragrahmen und Längsträger durch hin und her Rollen in seiner Lage verstellen kann.

In einer günstigen Verwirklichung des öffnungsfähigen Aufbaus ist vorgesehen, dass das Koppelteil ein Bolzen ist, der an dem Tragrahmen festgelegt ist und der bezüglich des Unterbaus insbesondere durch eine Bohrung des Unterbaus verstellbar ist. Der vorzugsweise zylindrische Bolzen ermöglichen eine einfache Festlegung der Verstellrichtung, die seiner Achse entspricht, und kann leicht nachgerüstet werden. Hierbei kann der Bolzen zugleich den Tragrahmen aussteifen und den Verstellweg durch entsprechende Anschläge begrenzen.

In einer anderen bevorzugten Verwirklichung des öffnungsfähigen Aufbaus ist vorgesehen, dass das Koppelteil ein Bolzen ist, der an dem Unterbau festgelegt ist. Der Tragrahmen ist dann bezüglich dieses feststehenden Bolzens beispielsweise mittels einer an den Bolzen angepassten Bohrung bezüglich des Tragrahmens und des Bolzens verstellbar.

Die beiden vorgenannten Verwirklichungen können auch miteinander kombiniert werden. Statt eines durchgehenden Bolzen können auch mehrere, z.B. zwei, Bolzenstummel vorgesehen sein, damit der Unterbau nicht vollständig durchbohrt werden muss.

Gemäß einer anderen bevorzugten Ausgestaltung ist vorgesehen, dass das Koppelteil eine an einem vom Tragrahmen und Längsträgerglied vorgesehene Mutter ist, die auf einer an dem anderen vom Tragrahmen und Längsträgerglied vorgesehenen Gewinde-, Spindel- oder Kugelumlaufspindelstange axial verstellbar ist. Die Spindelmutter wird auf der Gewindestange, Spindelstange oder Kugelumlaufspindelstange dadurch axial verlagert, dass sie die Gewindestange, Spindelstange oder Kugelumlaufspindelstange in Drehbewegung versetzt. Alternativ kann die Mutter auch drehbar an dem einen vom Tragrahmen und Längsträgerglied gelagert sein, so dass die Gewindestange, Spindelstange oder Kugelumlaufspindelstange dann nicht drehbar vorgesehen ist. Vorteil dieser Anordnung ist vor allem die geringe Kraft, die von den Schlitten in das Längsträgerglied eingeleitet werden muss, um dieses auf einer idealen Verstellposition zu zentrieren. Ferner ist es möglich, der drehbaren Spindelstange einen Antrieb, z.B. einen Elektromotor zuzuordnen, der die Verlagerung des Längsträgergliedes unterstützt, beispielsweise in Reaktion auf eine entsprechende Sensorik, die erfasst, welche Kraft von den Schlitten auf das Längsträgerglied übertragen wird.

Zugleich kann der Antrieb bei geschlossenem Aufbau das Längsträgerglied in eine Position verfahren, in der das Verdeck an einer Bewegung zusätzlich blockiert ist.

Vorzugsweise ist vorgesehen, dass das Koppelteil von zumindest einer Vorspanneinrichtung in oder entgegen einer Verlagerungsrichtung des Längsträgerglieds belastet ist. Ist das Koppelteil beispielsweise als den Tragrahmen mit dem Längsträgerglied koppelnder Lenker ausgebildet, kann der Lenker beispielsweise von einer Torsionsfeder um seine Anlenkung an einem der beiden Teile belastet sein, zweckmäßigerweise ist aber das Koppelteil von beiden Seiten her belastet, so dass es im Wesentlichen eine zentrale Verstellposition voreingestellt ist und durch Überwindung der Vorspannkraft aus der zentralen Verstellposition ausgelenkt werden kann.

Zweckmäßigerweise ist das Längsträgerglied endseitig in dem Tragrahmen festgelegt oder zumindest abgedichtet. Hierdurch wird zum einen verhindert, dass stirnseitig Teile in den Zwischenraum von Längsträgerglied und Tragrahmen eindringen und zum anderen das Längsträgerglied in dem Tragrahmen in der Endposition zentriert oder zumindest in seiner Verstellbarkeit reduziert, so dass definierte Ausgangsstellungen für das Verdeckgestell bei geöffnetem oder geschlossenem Aufbau geschaffen sind.

Vorzugsweise umfasst der Tragrahmen Durchbrechungen, durch die Wasser und andere rieselfähige Beladungen wie Sand, Kies oder anderes Ladegut, das von oben in den Unterbau verbracht wird, und das statt in den Unterbau in den Bereich der Tragrahmen fällt, aus dem Tragrahmen abgeführt werden kann. Hierdurch wird vorteilhaft verhindert, dass die Verstellbarkeit des Längsträgerglieds durch die Beladung behindert oder blockiert wird und überdies können die Schlitten zuverlässiger an dem Längsträgerglied entlang verlagert werden.

Gemäß einer günstigen Ausgestaltung ist vorgesehen, dass der Tragrahmen zumindest einen Abschnitt des Längsträgerglieds übergreift, so dass verhindert wird, dass das Längsträgerglied von dem Unterbau abgehoben werden kann. Das Festlegen des Längsträgerglieds an dem Unterbau kann auch durch das Koppelteil erfolgen, das ein Abheben des Längsträgergliedes von dem Unterbau verhindert. Es ist möglich, dass hierbei ein Spiel zwischen Längsträgerglied und Tragrahmen besteht, der ein geringfügiges Abheben zulässt. Durch das Verhindern des Abhebens des Längsträgergliedes von dem Tragrahmen und damit von dem Unterbau werden vor allem dynamische Belastungen, die bei der Fahrt beispielsweise mit einem Lastkraftwagenaufbau durch Fahrtwind und andere Umwelteinflüsse und Verwirbelungen entstehen und die das Verdeck nach oben belasten können, zuverlässig vorgebeugt.

Es ist möglich, das Längsträgerglied außerhalb eines Koppelteils an den Unterbau verstellbar anzuschließen, wobei ein Koppelteil die beiden Teile direkt verbindet. So können die Enden einer teleskopierbaren Führung an jeweils eines der beiden Teile angeschlossen, z.B. geschweißt, sein, und das Längsträgerglied nimmt dann jeweils den durch die Schlitten vorgegebenen optimalen Abstand ein. Alternativ kann eine Verbindung von Längsträgerglied und Unterbau ein federnd deformierbares Teil aufweisen, z.B. eine Torsionsfeder, die eine Verlagerung in y-Richtung gegen die Vorspannung der Feder zulässt.

Gemäß einer günstigen Ausführung ist der Tragrahmen beispielsweise aus einem stranggepressten Stahl- oder Aluminiumkörper gebildet, es ist aber auch günstig, wenn der Tragrahmen aus mehreren miteinander verbindbaren Teilstücken, insbesondere solchen stranggepressten Teilstücken, zusammengesetzt ist, so dass der Tragrahmen flexibel an die Länge des Unterbaus beziehungsweise von dessen seitlicher Wandung angepasst werden kann.

Auch das Längsträgerglied ist zweckmäßigerweise aus einem Werkstoff wie Stahl oder Aluminium im Stangpressverfahren hergestellt und kann günstiger Weise aus mehreren miteinander verbindbaren Teilstücken zusammengesetzt sein, wobei die Verbindung der Teilstücke derart stabil ist, dass bei der Verstellung des Längsträgergliedes die Teilstücke nicht auseinanderbrechen oder unterschiedlich verstellt werden.

Gemäß einer besonders günstigen Ausgestaltung ist vorgesehen, dass das Längsträgerglied durch wenigstens ein Federelement in eine Ausgangslage vorgespannt ist. Das Federelement stellt einen zusätzlichen Widerstand gegen die Verstellung des Längsträgergliedes quer zu der Verlagerungsrichtung der Schlitten dar, so dass das Längsträgerglied in eine vorzugsweise zentrale Verstellposition als Ausgangslage vorgespannt ist. Hierbei kann die Belastung des Längsträgergliedes unmittelbar, beispielsweise durch eine Blattfeder, die sich gegen den Tragrahmen abstützt und das Längsträgerglied von einer Wandung des Tragrahmens fort belastet, oder mittelbar, beispielsweise über ein Koppelteil oder einen Vorsprung des Längsträgerglieds, erfolgen. Das Federelement ist zweckmäßigerweise als Schraubenfeder aus Stahl hergestellt und in diskreten Abständen zwischen Längsträgerglied und Unterbau beziehungsweise Tragrahmen eingespannt, es ist aber auch möglich, ein durchgehendes Federglied wie eine Blattfeder vorzusehen. Alternativ kann auch ein Kunststoffpuffer das Federelement bilden, wobei der Kunststoffpuffer durchgehend zwischen Längsträgerglied und Unterbau beziehungsweise Tragrahmen angeordnet sein kann. Führt das Längsträgerglied eine Schwenk- oder Pendelbewegung um den Unterbau beziehungsweise den Tragrahmen aus, kann auch eine Torsionsfeder für die Vorspannung ausgewählt sein.

Gemäß einer besonders günstigen Ausgestaltung ist anstelle eines Lenkers bereits eine Torsionsfeder vorgesehen, so dass die als Torsionsfeder ausgebildete Koppeleinrichtung gleichzeitig die Kopplung von Tragrahmen und Längsträgerglied verwirklicht als auch die Verstellung des Längsträgerglieds in eine bevorzugte Verstelllage.

Zweckmäßigerweise ist beiderseits des Längsträgerglieds jeweils ein Federelement angeordnet, wobei die Federelemente das Längsträgerglied in Richtung auf eine voreinstellbare Ausgangslage der Verstellposition vorspannen. Durch das Vorsehen von Federelementen beiderseits des Längsträgerglieds kann das Längsträgerglied in eine zentrale Position, wo es nicht an einem Anschlag anliegt, vorgespannt sein, so dass eine Bewegung in zwei Richtung möglich ist.

Bevorzugt umfasst die Verstellrichtung des Längsträgergliedes quer zu der Verlagerungsrichtung des Schlittens eine horizontale Komponente, insbesondere, wenn es sich um einen den Unterbau nach oben verschließenden Aufbau handelt, wobei die Verstellrichtung vorzugsweise nur in eine horizontale Richtung senkrecht zu der Verlagerungsrichtung der Schlitten verläuft. Ist der Aufbau eine Seitenwandung, dann umfasst die Verstellrichtung (gehört zu der Verlagerungsrichtung der Schlitten) im Wesentlichen eine vertikale Komponente. Die Verlagerungsrichtung der Schlitten einerseits und die Verstellrichtung der Längsträgerglieder andererseits spannen bevorzugt eine Ebene im Raum auf, die der zu verschließenden Öffnung des Unterbaus entspricht.

Führt die Verstellbewegung des Längsträgerglieds eine Schwenk- oder Pendelbewegung aus, überlagert sich die horizontale Komponente und die vertikale Komponente, so dass sich die entsprechende Verlagerungsbewegung aus diesen beiden Komponenten ergibt.

Gemäß einer besonders günstigen Ausführung ist vorgesehen, dass je zwei, bezüglich einer den Unterbau in Längsrichtung halbierenden Ebene gegenüberliegende Schlitten durch einen Holm miteinander gekoppelt sind. Dieser Holm, der endseitig mit jeweils einem Schlitten ausgestattet ist, fährt dann mit jedem der beiden Schlitten auf jeweils einem Längsträgerglied in die Verlagerungsrichtung zum Öffnen und Schließen des öffnungsfähigen Aufbaus. Vorzugsweise ist der Holm starr ausgebildet, so dass die beiden Schlitten praktisch ohne Toleranz zueinander einen Abstand definieren, der den Abstand der beiden Längsträgerglieder vorgibt.

Gemäß einer günstigen Weiterbildung ist der Holm ausgewählt aus der Gruppe umfassend einen Spriegel, einen dachförmig geformten Spriegel, einen starren U-förmigen Bügel und einen beweglichen U-förmigen Bügel. Der Spriegel und der starre U-förmige Bügel, welcher beispielsweise bei Schiebebügelverdecken zum Einsatz kommt, ermöglichen kaum Deformation in die Richtung, in die die paarweise gegenüberliegenden Längsträgerglieder voneinander beabstandet sind und die zugleich vorzugsweise die Verstellrichtung des Längsträgergliedes ist. Ein weniger robuster und damit beweglicher U-förmiger Bügel hingegen gibt auf Grund der Kraft, mit der die Längsträgerglieder zentriert sind, nach.

Zweckmäßigerweise ist die Kraft zum Verlagern des Längsträgerglieds geringer dimensioniert als die Kraft zum elastischen und/oder plastischen Deformieren des Holms. Hierdurch wird sichergestellt, dass nicht der Holm oder der Schlitten elastisch oder plastisch deformiert wird, sondern das Längsträgerglied verstellt wird, insbesondere gegen die Vorspannung eines entsprechenden das Längsträgerglied in eine voreingestellte Verstelllage vorspannenden Federglieds. Hierdurch wird vorteilhaft erreicht, dass das Längsträgerglied dem Holm mit den daran angeschlossenen Schlitten folgt, wobei die Schlitten die Kraft zur Verstellung des Längsträgerglieds in das Längsträgerglied einleiten. Sollte der Unterbau oder der Schlitten plastisch deformiert worden sein, führt dies dazu, dass der Abstand der paarweise die Führung bildenden Längsträgerglieder geändert werden muss, um ein einfaches Abrollen beziehungsweise Gleiten der Schlitten an den Längsträgergliedern zu erlauben; dies wird dadurch erreicht, dass die Längsträgerglieder in eine Richtung quer zu der Verlagerungsrichtung der Schlitten verstellt werden.

Gemäß einer günstigen Ausführungsform ist vorgesehen, dass das Längsträgerglied elastisch verformbar ist. Kann das Längsträgerglied elastisch deformiert werden, kann es, wenn es endseitig jeweils eingespannt ist, genau die Lage einnehmen, wie zur Anpassung an den Abstand eines einem Holm zugeordneten Paares Schlitten erforderlich, wobei die Kraft zum Verstellen des Längsträgerglieds aus der Eigenspannung des Längsträgerglieds erzeugt ist.

Gemäß einer bevorzugten Weiterbildung ist vorgesehen, dass das Längsträgerglied zumindest eine Bahn für eine vertikale Kräfte aufnehmende Tragrolle des Schlittens und zumindest eine Bahn für eine horizontale Kräfte aufnehmende Führungsrolle des Schlittens aufweist. Die Tragrolle ist hierbei zweckmäßigerweise um eine horizontale oder zumindest überwiegend horizontale Achse gelagert, die Führungsrolle ist hierbei um eine vertikale oder zumindest überwiegend vertikale Achse gelagert. Die Führungsrolle überträgt hierbei im Wesentlichen diejenige Kraft, mit der das Längsträgerglied verstellt wird. Zweckmäßigerweise ist vorgesehen, dass sowohl die Tragrolle als auch die Führungsrolle um Achsen gelagert sind, die eine vertikale Komponente und eine horizontale Komponente aufweisen, damit, wenn weiter vorgesehen ist, dass das Längsträgerglied von beiden Seiten bezüglich seiner Verstellrichtung beaufschlagt wird, sowohl eine Zug- als auch eine Druckbewegung in das Längsträgerglied eingeleitet werden kann.

Gemäß einer ersten günstigen Ausgestaltung ist das Verdeckgestell als Schiebebügelverdeck ausgebildet, das entlang eines Paars gegenüberliegender Längsträgerglieder verschiebbar ist. Das Schiebebügelverdeck weist im Wesentlichen umgedreht U-förmige Holme auf, die endseitig einen Schlitten aufweisen, der an jeweils einem Längsträgerglied verlagerbar ist. Die U-förmigen Holme sind sehr stabil ausgebildet, da sie einen voluminösen Aufbau tragen und können daher in eine Richtung quer beziehungsweise senkrecht zu Verlagerungsrichtung der Schlitten kaum deformiert werden. In diesem Fall können die Längsträgerglieder vorteilhaft an das Maß der Holme des Schiebebügelverdecks angepasst werden.

Gemäß einer anderen bevorzugten Ausgestaltung ist vorgesehen, dass das Verdeckgestell als Schiebedach ausgebildet ist, das entlang zweier von Seitenaufbauten, wie beispielsweise Rungen oder starren Seitenwandungen, abgestützter Längsträgerglieder verschiebbar ist. Bei einer Ausgestaltung als Schiebedach sind die die Schlitten verbindenden Holme langgestreckt oder dachförmig oder U-förmig ausgebildet, ermöglichen aber nur ein geringes Nachgeben in die Richtung quer beziehungsweise senkrecht zu der Verlagerungsrichtung der Schlitten, so dass die Längsträgerglieder sich an das Maß der von dem Holm beabstandeten Schlitten anpassen.

Gemäß einer anderen bevorzugten Ausgestaltung ist vorgesehen, dass das Verdeckgestell als verschiebbare Seitenwand ausgebildet ist, die entlang zweier übereinander angeordneter Längsträgerglieder verschiebbar ist. In diesem Fall ist unter Berücksichtigung der Gewichtskraft der Masse des Verdeckgestells die Vorspannung der Längsträgerglieder einzustellen, so dass im Wesentlichen die Abstützung mit einer Feder entgegen der Schwerkraft zweckmäßig ist.

Soll an einem Unterbau sowohl eine Dachöffnung als auch eine Seitenöffnung verschlossen werden, kann zweckmäßig an einem Teil des Verdeckgestells ein erstes verstellbares Längsträgerglied für die obere Öffnung und ein zweites verstellbares Längsträgerglied für die Seitenöffnung vorgesehen sein, die jeweils unabhängig voneinander verstellt werden können, da sie zwei voneinander unabhängigen Abdeckungen zugeordnet sind. Gleichwohl können die Längsträgerglieder in einem gemeinsamen Tragrahmen, der beispielsweise über Rungen gegen eine Ladepritsche des Unterbaus abgestützt ist, verstellbar eingesetzt sein.

Gemäß einer günstigen Ausgestaltung ist vorgesehen, dass an Schlitten Planenfalthilfen angeschlossen sind, die eine an das Verdeckgestell angeschlossene Plane abheben oder in Falten legen. Die Planenfalthilfen bilden ein Knie, dessen Öffnungswinkel sich verkleinert, wenn die Schlitten zusammengefahren werden, so dass die Plane abgehoben und in Falten gelegt wird.

Gemäß einer alternativen Ausführung können bezüglich des Längsträgergliedes benachbarte Schlitten über eine Gelenkanordnung miteinander gekoppelt sein, die bei geschlossenem Aufbau ihre maximale Erstreckung einnimmt. Hierbei kann die Gelenkanordnung sowohl starre Teile anheben als auch als Plane ausgebildete Teile anheben.

Zweckmäßigerweise sind an den Schlitten Abdeckplatten gelenkig angeschlossen, die bei geschlossenem Aufbau eine geschlossene Abdeckung ausbilden und bei geöffnetem Aufbau ziehharmonikaartig zusammenlegbar sind. Hierzu können die jeweils mit dem Schlitten gelenkig verbundenen Abdeckplatten paarweise auch miteinander gelenkig verbunden sein, so dass sich die aus den Abdeckplatten gebildete Abdeckung zusammenfalten lässt. In gleicher Weise kann so ein öffenbares und zugleich steifes Dach oder eine Seitenöffnung des Unterbaus abgedeckt werden, wobei die Abdeckplatten eine hohe Steifigkeit aufweisen und es entsprechend günstig ist, wenn das Längsträgerglied nachgibt.

Zweckmäßigerweise wird die Kraft zur Verstellung der Längsträgerglieder durch die Verlagerung der Schlitten entlang der Längsträgerglieder übertragen, so dass das Längsträgerglied durch die Schlitten und die die Schlitten paarweise verbindenden Holme auf die gewünschte Spurweite eingestellt werden. Auf diese Weise lassen sich auch Fertigungstoleranzen und dergleichen ausgleichen.

Das Verdeckgestell kann zum Öffnen und Schließen manuell betätigt werden, wobei die steife Ausgestaltung des Verdeckgestells es ermöglicht, dass die Kraft zum Verlagern der Schlitten entlang der Längsträgerglieder auch einseitig, z.B. durch Ziehen an einer mit dem vordersten Schlitten gekoppelten Schlaufe, ermöglicht ist. Besonders bevorzugt ist jedoch, wenn die Verlagerung der Schlitten durch einen motorischen Antrieb erfolgt, der in besonders günstiger Weise davon profitiert, dass die Längsträgerglieder sich an die verlagerten Schlitten in ihrer Lage anpassen können.

Der Aufbau zeichnet sich in vorteilhafter Ausgestaltung dadurch aus, dass das Längsträgerglied in der Verstellrichtung, die quer und vorzugsweise senkrecht zu der Verlagerungsrichtung der Schlitten, die zugleich die Haupterstreckungsrichtung des Längsträgerglieds ist, stufenlos verstellbar ist. Die Verstellung ist frei von Verriegelungen und ohne vorherigen Entriegelungsvorgang möglich. In so weit kann das Längsträgerglied in günstiger Weise jederzeit dem Verdeckgestell des Schiebedachs folgen, ohne dass manuelle Einstellungen vorgenommen werden müssen. Die beiden gegenüberliegenden Längsträgerglieder folgen hierbei stets dem Verdeckgestell sowie etwaigen äußeren Einflüssen, so dass der Aufbau stets nur einen geringen Widerstand beim Öffnen oder Schließen überwinden muss.

Zweckmäßiger Weise ist vorgesehen, dass die Verstellrichtung des Längsträgergliedes senkrecht zu der Verlagerungsrichtung der Schlitten vorgesehen ist. Die Verstellbewegung des Längsträgerglieds ist hierbei stufenlos möglich. Zwar ist der Verstellweg des Längsträgergliedes beispielsweise durch Endanschläge begrenzt, die Verstellposition des Längsträgergliedes ist aber frei, kann nicht und muss nicht für eine funktionierende schwimmende Verstellung blockiert oder arretiert werden.

Vorzugsweise spannen die Verstellrichtung des Längsträgerglieds und die Verlagerungsrichtung der Schlitten eine Ebene auf, die einer Ebene der Öffnung des Unterbaus entspricht, die durch den Aufbau zu schließen ist.

Der Unterbau umfasst insbesondere feststehende Wandungen, wie dies z.B. bei einer Kippmulde oder einem feststehenden Gehäuse der Fall ist. Die feststehenden Wandungen sind zwar in der Regel geeignet, Aufbauten zu tragen, ist aber das Verdeckgestell ebenfalls sehr starr, kommen die Vorteile einer schwimmenden Verstellbarkeit des Längsträgers besonders zum Tragen.

Die Verstellbarkeit des Längsträgergliedes umfasst somit nicht etwa eine Arretierbarkeit oder Feststellbarkeit des Längsträgergliedes; vielmehr ist das Längsträgerglied jederzeit verstellbar, ohne eine konkrete Verstellposition einnehmen zu müssen.

Gemäß einem Aspekt der Erfindung ist ein Nutzfahrzeug, ein Gebäude, ein Container oder Bahnwaggon geschaffen, der einen öffnungsfähigen Aufbau wie vorstehend beschrieben enthält. Trotz der sehr stabilen Ausgestaltung sowohl des Unterbaus als auch des öffnungsfähigen Aufbaus wird durch das in Querrichtung zu der Verlagerungsrichtung der Schlitten verstellbare Längsträgerglied eine komfortable und zuverlässige Bedienung, eine Öffnung und/oder ein Schließen des Aufbaus sichergestellt.

Besonders günstig ist der Unterbau, der mit einem öffnungsfähigen Aufbau ausgestattet werden soll, ein wannenförmiges Bauwerk, wie zum Beispiel eine Leckagewanne für Container, eine Betonwanne, ein Silo, ein Sand- oder Kiesbunker oder eine Garage. Der Aufbau schützt das Bauwerk insbesondere gegen Niederschläge. Soll in das wannenförmige Bauwerk z.B. ein rieselfähiges Gut, z.B. Saatgut oder Kies, eingebracht werden, wird der Aufbau geöffnet, so dass ein Muldenkipper in das Bauwerk einfahren und das Gut abkippen kann. Hernach wird der Aufbau bzw. das Schiebedach wieder geschlossen, so dass keine permanente Kontamination mit Stäuben, Pflanzensporen oder Niederschlägen erfolgt. Für solche wannenförmigen Bauwerke gab es bislang keine für den Dauerbetrieb geeigneten öffenbare Aufbauten. Auch eine Nachrüstung bestehender Bauwerke mit öffenbaren Aufbauten ist nunmehr möglich.

Gemäß einem Aspekt der Erfindung ist ein Verfahren zum Verlagern eines öffnungsfähigen Aufbaus, insbesondere eines öffnungsfähigen Dachs, einer öffnungsfähigen Seitenwand oder einer öffnungsfähigen Abdeckung angeben, bei dem an einem Unterbau jeweils ein erstes Führungselement und ein zweites Führungselement angeordnet ist, bei dem Teile eines Gestells des Aufbaus entlang einem der Führungselemente in eine primäre Verlagerungsrichtung verlagert werden können, um eine Öffnung des Unterbaus freizugeben oder zu verschließen, wobei sich das Verfahren dadurch auszeichnet, dass die Führungselemente unabhängig voneinander quer zu der primären Verlagerungsrichtung in eine Ausweichrichtung, die vorzugsweise senkrecht zu der Verlagerungsrichtung ist oder zumindest eine hierzu senkrechte Komponente enthält, verlagerbar sind. Das Verfahren ermöglicht es vorteilhaft, Toleranzen bei der Fertigung des Gestells oder der Teile des Gestells, temperaturbedingte, durch thermische Ausdehnung entstehende Toleranzen sowie auf Grund von Beulen, Dellen und anderen Beschädigungen des Unterbau entstehende Unter- und Übermaße auszugleichen, so dass das Verdeck auch bei starker Deformation oder Beeinträchtigung des Unterbaus oder Gestells mit geringem Kraftaufwand geöffnet oder geschlossen werden kann und zugleich eine zuverlässige Abdeckung des Unterbau erreicht wird.

Zweckmäßigerweise bewirkt die Verlagerung der Teile des Gestells, insbesondere der Schlitten, in die primäre Verlagerungsrichtung die Verlagerung der Führungselemente in die Ausweichrichtung, so dass insbesondere im Abstand des ersten Führungselements von dem zweiten Führungselement bedingte Toleranzen ausgeglichen werden können.

Das erste und das zweite Führungselement definieren daher auf Grund ihrer in eine im Wesentlichen parallelen Richtung beweglichen Ausweichbewegungen eine im Prinzip unendliche Anzahl von Möglichkeiten, die Verlagerung der Teile des Gestells zuzulassen, so dass auch bei auf Grund der Temperatur der Beladung, der Art der Beladung, dem Gewicht der Beladung oder der dynamischen Beanspruchung des Unterbaus stets mit geringen Kraftaufwand eine Öffnung des Unterbaus freigegeben oder verschlossen werden kann.

Weitere Vorteile, Eigenschaften, Weiterbildungen und Ausgestaltungen der Erfindung ergeben sich aus der nachfolgenden Beschreibung bevorzugter Ausführungsbeispiele sowie aus den abhängigen Ansprüchen.

Die Erfindung wird nachstehend unter Bezugnahme auf die anliegenden Zeichnungen anhand bevorzugter Ausführungsbeispiele näher erläutert.
- Fig. 1: zeigt eine perspektivische Ansicht eines bevorzugten Ausführungsbeispiels eines erfindungsgemäßen öffnungsfähigen Aufbaus.
- Fig. 2: zeigt einen vergrößerten Ausschnitt des Aufbaus aus Fig. 1.
- Fig. 3: zeigt einen Querschnitt durch den Aufbau aus Fig. 1 und Fig. 2.
- Fig. 4: zeigt einen Querschnitt durch eine alternative Ausgestaltung eines Aufbaus.
- Fig. 5: zeigt eine schematische Draufsicht auf eine alternative Ausgestaltung eines Aufbaus.
- Fig. 6: zeigt einen Querschnitt mit einer alternativen Ausgestaltung eines Aufbaus.
- Fig. 7: zeigt schematisch einen Querschnitt durch einen Teil eines abgewandelten Aufbaus.
- Fig. 8: zeigt einen Querschnitt durch noch einen abgewandelten Aufbau.
- Fig. 9: zeigt einen Querschnitt durch eine weitere alternative Ausgestaltung eines Aufbaus.
- Fig. 10: zeigt einen Querschnitt durch ein weiteres bevorzugtes Ausführungsbeispiel eines erfindungsgemäßen öffnungsfähigen Aufbaus.
- Fig. 11: zeigt einen Ausschnitt des Aufbaus aus Fig. 10 in einer perspektivischen Ansicht von außen.
- Fig. 12: zeigt einen Ausschnitt des Aufbaus aus Fig. 10 und 11 in einer perspektivischen Ansicht von innen.
- Fig. 13: zeigt einen Querschnitt durch ein alternatives Ausführungsbeispiel eines erfindungsgemäßen öffnungsfähigen Aufbaus.
- Fig. 14: zeigt einen Ausschnitt des Aufbaus aus Fig. 13 in einer perspektivischen Ansicht von außen.
- Fig. 15: zeigt einen Ausschnitt des Aufbaus aus Fig. 13 und 14 in einer perspektivischen Ansicht von innen.
- Fig. 16: zeigt einen Querschnitt durch ein weiteres bevorzugtes Ausführungsbeispiel eines erfindungsgemäßen öffnungsfähigen Aufbaus.

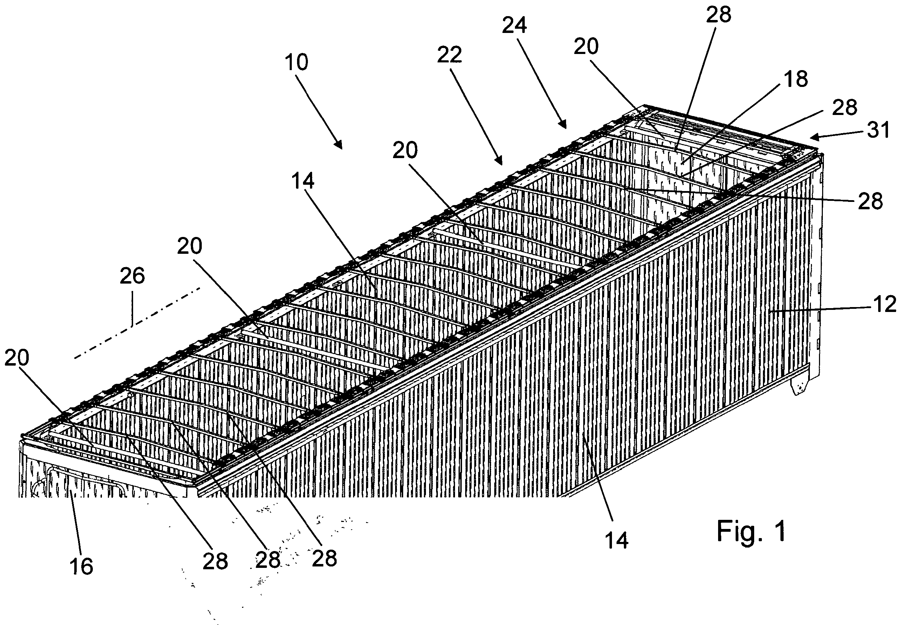

Fig. 1 zeigt einen insgesamt mit 10 bezeichneten öffnungsfähigen Aufbau, der als Schiebedach für einen Unterbau bildenden Auflieger ausgebildet ist. Der Unterbau 12 umfasst zwei starre Seitenwände 14, eine hierzu senkrechte, starre Stirnseite 16 und eine zwei öffenbare starre Türen enthaltende Rückseite 18, die insgesamt auf einer Bodenfläche des Unterbaus aufgebaut sind. Der Unterbau 12 ist insgesamt sehr steif, was für zu transportierende Lasten günstig ist, da der Unterbau statische und dynamische Lasten gut ableitet. Man erkennt, dass die gegenüberliegenden Seitenwände 14, die auch öffenbar ausgebildet sein können, zusätzlich mit Versteifungsstangen 20 miteinander verspannt sind, um den Unterbau auch in seiner oberen Region zu stabilisieren.

Der Dachbereich, der von den Seitenwandungen 14, der Stirnwand 16 und der Rückwand 18 eine umschlossene Öffnung bildet, ist von einem insgesamt mit 22 bezeichneten Schiebedach bedeckt, das aus einem Verdeckgestell 24 und einer hieran befestigten, nur strichpunktiert angedeuteten Plane 26 gebildet ist. Das Verdeckgestell 24 umfasst eine Mehrzahl von als steifer Spriegel ausgebildeten Holmen 28, die endseitig jeweils mit einem Schlitten 30 mittels einer Vernietung verbunden sind, wobei der Schlitten 30 entlang einer Führung verlagerbar ist, die ein Längsträgerglied 32 umfasst.

An seinem öffenbaren Ende ist das Verdeckgestell 24 mit einem Endlaufteil 31 ausgestattet, der im Wesentlichen zwei Holmen 28 mit daran angeschlossenen Schlitten 30 umfasst, wobei die Holme 28 oder die benachbarten Schlitten 30 mit einer Verbindungsstange zur Bildung eines starren Teils verbunden sind. Der Endlaufteil 31 überfährt beim Öffnen des Aufbaus 10 die gesamte Länge der Führung bzw. des Längsträgerglieds 32 und schiebt die weiteren Schlitten beim Öffnen sukzessive vor sich her. Das Endlaufteil 31 ist sehr starr, da es einen von einer Seite eingeleitete Zugkraft auf das gesamte Gestell übertragen muss und zugleich ein Verkanten vermieden werden soll.

Benachbarte Schlitten 30 sind jeweils durch eine als Faltplatte ausgebildete Planenfalteinrichtung 34, die um eine Achse 34a jeweils gelenkig an den Schlitten 30 angeschlossen ist, miteinander verbunden, wobei die Planenfalteinrichtung 34 einen biegsamen zentralen Abschnitt 34b aufweist, der das Zusammenfalten der Planenfalteinrichtung 34 nach Art eines Knies beim Zusammenführen der Schlitten 30 zulässt. Die Plane 26 ist hierbei an den Schlitten 30 und/oder an den Holmen 28 befestigt und zugleich über den flexiblen Bereich 34b der Planenfalteinrichtung 34 geführt, so dass die Plane 26 ziehharmonikaartig in Falten gelegt wird, wenn benachbarte Schlitten 30 entlang des Längsträgerglieds 32 zusammengeführt werden.

Es ist möglich, bezüglich einer Längshalbierenden des Unterbaus 14, also derjenigen Ebene, die mittig zwischen den gegenüberliegenden Seitenwandungen 14 verläuft, an Stelle des flexiblen Bereichs ein Gelenk mit wahlweise einem Hubspriegel vorzusehen, der die Plane 26 zusätzlich anhebt. Es ist weiter möglich, das Schiebedach 22 nur mit Hubspriegeln auszustatten und die Holme 28 dafür wegzulassen. Es ist weiterhin möglich, die als Planenfalthilfe vorgesehenen Faltplatten 34 derart auszubilden, dass sie über die gesamte Breite des Aufbaus 10 verlaufen, und ggf. zusätzlich auch noch an den Holmen 28 festgelegt sind, so dass im Wesentlichen ein aus starren Teilen bestehendes Dach ausgebildet wird. In diesem Fall ist anstelle der biegsamen Stelle 34b eine Gelenkanordnung vorgesehen, die das Zusammenklappen der entsprechenden Platten ermöglicht, wobei zweckmäßigerweise im geschlossenen Zustand des Aufbaus 10 dann eine Überdeckung erfolgt, um zu verhindern, dass Regen oder dergleichen in das Innere des Unterbaus 12 eindringen kann. Weiterhin ist alternativ möglich, dass anstelle eines im Wesentlichen eine Linie ausmachenden Holmes 28 der Holm U-förmig ausgebildet ist, so dass der Aufbau den Unterbau 12 nicht nur an einer Öffnung abdeckt, sondern überbaut.

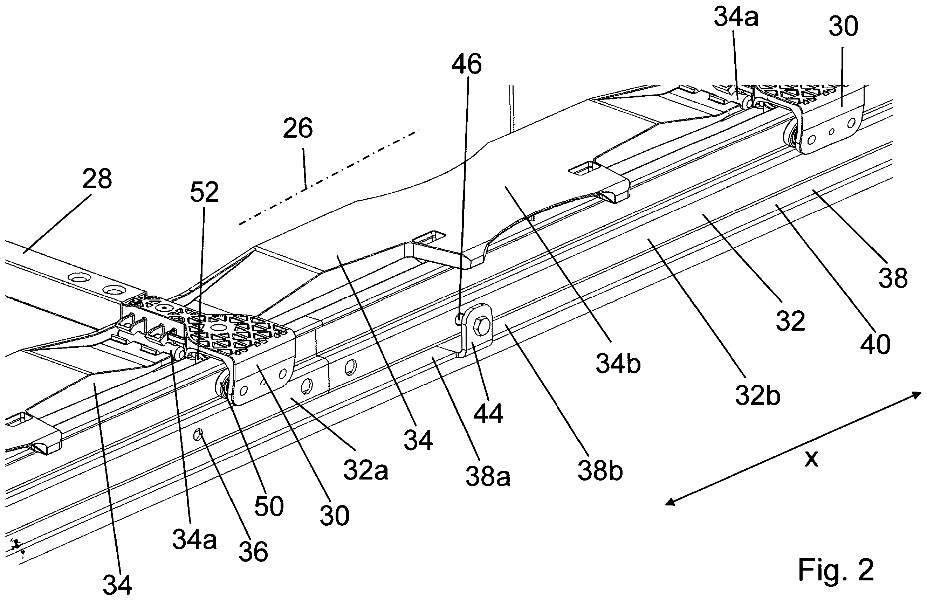

Das Längsträgerglied 32 ist aus mehreren Teilstücken 32a, 32b (vgl. Fig. 2) zusammengesetzt, die stirnseitig miteinander verbunden sind. In dem Längsträgerglied 32 sind Bohrungen 36 vorgesehen, die senkrecht zur Erstreckung des Längsträgerglieds 32 verlaufen und für den Anschluss des Längsträgerglieds 32 an einem Tragrahmen 38 vorgesehen sind. Das Längsträgerglied 32 und der Tragrahmen 38 bilden gemeinsam eine Führung für die Schlitten, wobei, wie nachstehend noch weiter erläutert wird, die Schlitten in ihrer Verlagerungsrichtung (x-Richtung) entlang des Längsträgerglieds 32 verlagerbar sind, und das Längsträgerglied 32 in eine Richtung quer dazu an dem Tragrahmen 38 verstellbar ist.

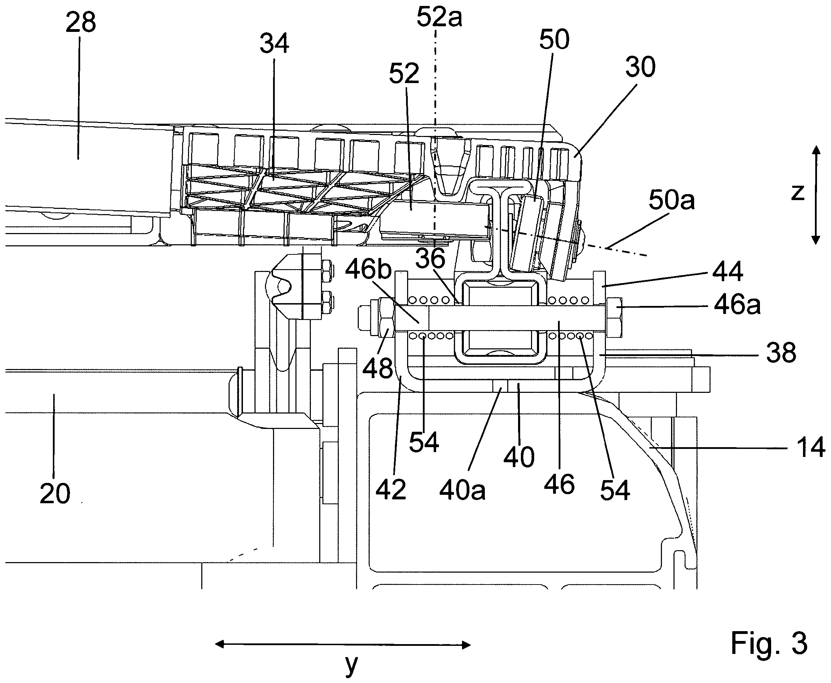

In Fig. 3 erkennt man, dass das Längsträgerglied 32 einen im Wesentlichen quadratischen unteren Profilabschnitt aufweist, von dem sich aus mittig ein im Wesentlichen T-förmiger oberer Abschnitt erstreckt. Die Bohrung 36 durchsetzt hierbei die beiden vertikalen Wandungen des quadratischen Abschnitts. An beiden Seitenwandungen 14 ist oben eine solche Führung aus einem Tragrahmen 38 und einem Längsträgerglied 32 vorgesehen.

Der Tragrahmen 38 ist ebenfalls aus mehreren Tragrahmenstücken 38a, 38b, die axial miteinander verbunden sein können, aber nicht müssen, ausgebildet, wobei die Tragrahmenstücke 38a, 38b auf der Oberseite der Seitenwandung 14 des Unterbaus 12 befestigt sind. Es ist möglich, dass der Tragrahmen 38 auch schon einstückig mit der Seitenwand bzw. dem Unterbau ausgebildet ist. Der Tragrahmen 38 weist einen Basisabschnitt 40 auf, der eine Bohrung 40a enthält, mit der der Tragrahmen 38 an der Seitenwand 14 verschraubt werden kann. Auf seiner inneren Seite, also der dem Inneren des Unterbaus 12 zugekehrten Seite, weist der Tragrahmen 38 eine durchgehende, im Wesentlichen senkrechte Wand 42 auf, so dass Tragrahmen 38 ein im Wesentlichen L-förmiges Profil aufweist. An bestimmten Stellen des Tragrahmens 38, insbesondere am Ende des Tragrahmenabschnitts 38a, 38b ist eine Abfaltung 44 ausgebildet, die parallel zu der Wand bzw. dem Abschnitt 42 ausgerichtet ist. Die seitlichen Wandungen 42 und 44 begrenzen die seitliche Bewegung des Längsträgerglieds 32 in der Art von Anschlagflächen. Es ist möglich statt der Abfaltungen 44 auch einen durchgehenden Schenkel entsprechend der Wand bzw. dem Schenkel 42 vorzusehen. Der Bereich zwischen benachbarten Abfaltungen 44 bildet eine Durchbrechung, durch die Regen oder herabgefallene Teile der Beladung heraus geleitet werden können. Es ist möglich, hierzu auch weitere Durchbrechungen in der Basis 40 vorzusehen, wenn diese dann in den Bereich außerhalb des Laderaums herausführen. Es ist möglich, den Tragrahmen auch gleich als einstückiges oder mehrteiliges Teil der Seitenwand 14 auszubilden.

Durch Bohrungen 44a, 42a der Schenkel 44, 42 ist ein Schraubenbolzen 46 mit einem Kopf 46a und einem Gewindeabschnitt 46b hindurchgeführt, der von einer Mutter 48 an dem Tragrahmen 38 fixiert ist. Der Schraubenbolzen 46 durchsetzt auch die Bohrung 36 des Längsträgergliedes 32 und bildet damit ein eine Relativbewegung zulassendes Koppelteil zur Verbindung des Tragrahmens 38 mit dem Längsträgerglied 32, wobei der Bolzen 46 zugleich eine Führung für eine Relativbewegung des Längsträgerglieds 32 quer zu der Erstreckungsrichtung des Tragrahmens 38 und des Längsträgerglieds 32 definiert. Hierdurch ist vorteilhaft gewährleistet, dass das Längsträgerglied 32 sich nur in eine zu der Verlagerungsrichtung x der Schlitten senkrechte, horizontale Ausweichrichtung y verlagern kann. Zugleich stellt der Bolzen 46 sicher, dass das Längsträgerglied 32 nicht von dem Tragrahmen 38 und damit von der Seitenwand 14 abgehoben werden kann, so dass das Schiebedach 22 insgesamt trotz der Verschiebbarkeit des Längsträgerglieds 32 an dem Unterbau 12 festgelegt ist.

Man erkennt, dass der Schlitten 30 über eine überwiegend senkrecht angeordnete, um eine horizontale Achse 50a drehbare Tragrolle 50 und eine um eine überwiegend vertikale Achse 52a drehbare Führungsrolle 52 an dem oberen T-förmigen Profil des Längsträgerglieds 32 angeschlossen ist, wobei sich die Tragrolle 50 überwiegend auf einer äußeren oberen Fläche des quadratischen unteren Profilteils des Längsträgerglieds 32 abrollt und von dem Querstrich des T-förmigen Profils an einem Ausheben nach oben gehindert ist, während sich die Führungsrolle 52 im Wesentlichen an dem Aufstrich des T-förmigen Profils abrollt. Dadurch, dass beide Rollen 50, 52 eine Neigung sowohl gegen die Vertikale als auch gegen die Horizontale aufweisen, können diese Kräfte sowohl in y-Richtung als auch in z-Richtung einleiten, so dass die Abstützung des Verdecks in z-Richtung - überwiegend durch die Tragrolle 50 - erfolgt, während die Verschiebung des Längsträgergliedes 32 entlang des Bolzens 46 in y-Richtung erfolgt. An dem Schlitten 30 sind jeweils zwei Führungsrollen 50 und zwei Tragrollen 52 angeordnet.

Man erkennt, dass auf dem Bolzen 46 in dem Zwischenbereich zwischen den Schenkeln 42, 44 einerseits und dem unteren Profilabschnitt des Längsträgergliedes 32 andererseits jeweils ein als Schraubenfeder ausgebildetes Federelement 54 angeordnet ist, die gemeinsam das Längsträgerglied 32 in eine im Wesentlichen zentrierte Verstellposition vorspannen, aber das Verstellen des Längsträgerglieds entlang des Bolzens 46 bei Aufbringen einer die Kraft der Federglieder 54 überwindenden von außen eingeleiteten Kraft zulassen können.

Wird nun das Verdeckgestell geöffnet oder geschlossen, werden die Schlitten 30 mit dem steifen Endlaufteil 31 entlang des Längsträgerglieds 32 verlagert, wobei aufgrund der steifen Ausgestaltung der Holme 28 über die Rollen 50, 52 der von dem Verdeckgestell 24 vorgegebene Abstand dazu führt, dass die Längsträgerglieder 32 derart entlang der Bolzen 46 verstellt werden, dass diese in eine bezüglich des Verdeckgestells 24 optimale Verstellposition verstellt werden. Ist beispielsweise der Unterbau 12 auf einer schrägen Fläche abgestellt, kann dies bereits die optimale Lage des Längsträgergliedes 32 beeinflussen. Ist dann der Unterbau 12 auch noch beschädigt oder aufgrund einer Beladung ausgebeult oder aufgrund der Temperatur der Beladung thermisch ausgedehnt, vermag die Verstellbarkeit des Längsträgergliedes 32 eine sonst eintretende Blockade zu überwinden, so dass auch dann der Aufbau geöffnet und geschlossen werden kann und es weder zu einem Verklemmen noch zu einem Verkanten des Verdeckgestells an der Führung bzw. den beiden Längsträgergliedern 32 kommt.

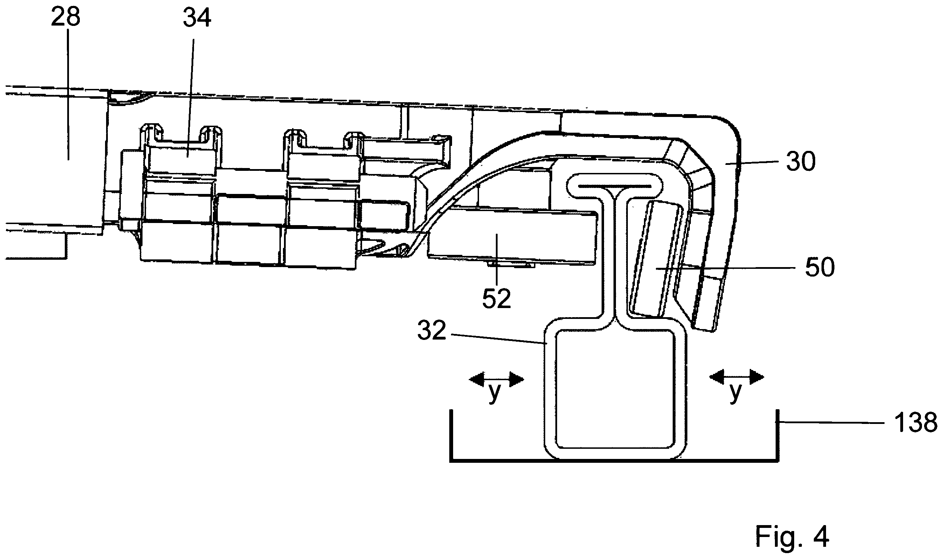

In Fig. 4 ist eine alternative Ausführungsform beschrieben, wobei dieselben Bezugszeichen wie bei dem Ausführungsbeispiel gemäß Fig. 1 bis 3 dieselben oder strukturell vergleichbare Teile bezeichnen.

Im Unterschied zu dem vorhergehenden Ausführungsbeispiel ist das Längsträgerglied 32 nicht über einen Bolzen mit dem Tragrahmen 138 gekoppelt, sondern liegt auf dem Tragrahmen 138 auf. Hierbei ist ein Koppelglied zwischen dem Tragrahmen 138 und dem Längsträgerglied 32 vorgesehen derart, dass das Längsträgerglied 32 nicht vertikal abgehoben werden kann. Ein solches Koppelglied kann beispielsweise ein das Längsträgerglied 32 nach unten durch eine Bohrung verlängernder Bolzen sein, der in einem in y-Richtung verlaufenden Langloch des Tragrahmens 138 gefangen und gesichert ist. Man erkennt ferner, dass der Tragrahmen 138 im Querschnitt U-förmig ausgebildet ist, so dass dessen Schenkel zugleich Anschlagflächen für die Verlagerung des Längsträgerglieds 32 bilden.

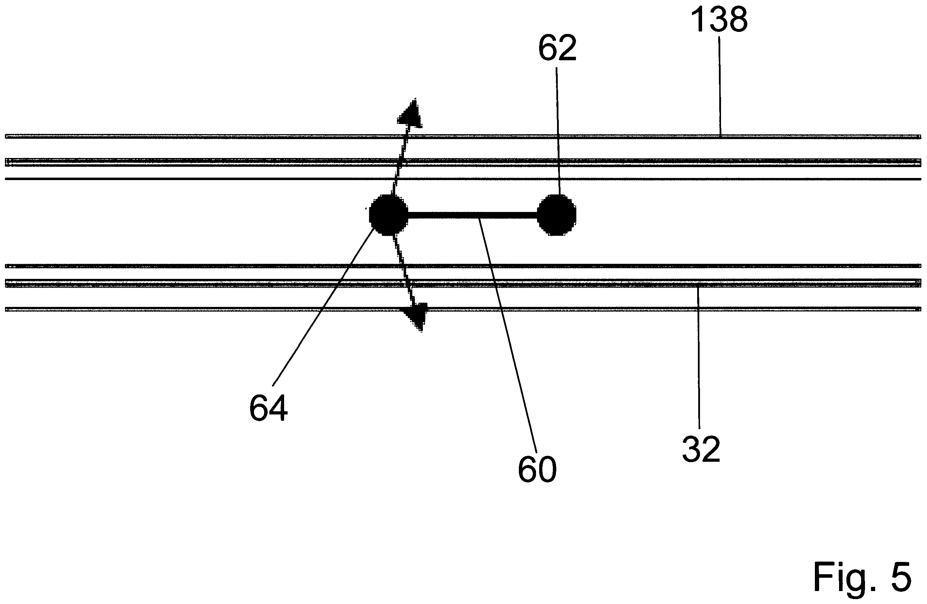

Fig. 5 zeigt eine Abwandlung des Ausführungsbeispiels gemäß Fig. 4 in einer Draufsicht, wobei der U-förmige Tragrahmen 138 das Längsträgerglied 32 aufnimmt. Hierbei ist in der Basis des Tragrahmens 138 in einem Gelenk 62 ein als Lenker ausgebildetes Koppelteil 60 schwenkbar gelagert, während das andere Ende des Lenkers 60 schwenkbar in der Unterseite des Längsträgerglieds 32 in einem Gelenk 64 gelagert ist. Der Lenker 60 verbindet zugleich das Längsträgerglied 32 mit dem Tragrahmen 138 und verhindert, dass das Längsträgerglied 32 noch oben abgehoben werden kann. Hierdurch ist es nicht erforderlich, dass der Tragrahmen 138 das Längsträgerglied 32 übergreift. Zugleich ermöglich die doppelte Anlenkung des Lenkers 60 um die Achsen 62 und 64 eine Verlagerung des Längsträgerglieds 32 in eine weit überwiegend in y-Richtung verlaufende Verstellrichtung, wobei zweckmäßigerweise jeweils ein erster Lenker 60 im vorderen Bereich des Längsträgergliedes 32 und ein zweiter Lenker 60 im hinteren Bereich des Längsträgergliedes 32 vorgesehen sind, die gemeinsam mit den Tragrahmen 138 und dem Längsträgerglied 32 ein Parallelogramm aufspannen. Der Anteil der Verstellung des Längsträgergliedes 32 in die x-Richtung der Verlagerung der Schlitten 30 ist wegen der kleinen Winkel, die der Lenker 60 einnehmen kann, gering.

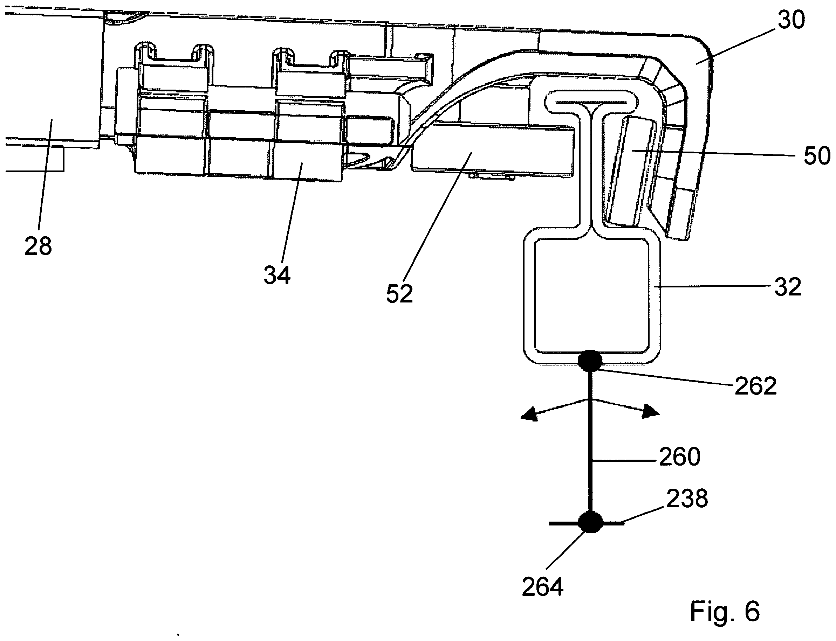

Fig. 6 zeigt eine alternative Ausführungsform, bei der dieselben Bezugszeichen wie bei der Ausführungsform gemäß Fig. 1 bis 3 dieselben oder strukturell vergleichbare Teile bezeichnen.

Im Unterschied zu der Ausführungsform gemäß Fig. 5 ist das Längsträgerglied 32 mit dem Tragrahmen 238 über einen Lenker 260 gekoppelt, der im Wesentlichen um eine horizontale Achse 262 an dem Längsträgerglied 32 und um eine horizontale Achse 264 an der Basis des Tragrahmens 238 angelenkt ist und sich überwiegend vertikal erstreckt. Der Lenker 260 ermöglich damit eine Verstellbarkeit des Längsträgergliedes 32 überwiegend in y-Richtung und ein Stück weit in z-Richtung. Zugleich verbindet der Lenker 260 das Längsträgerglied 32 auch mit dem Tragrahmen 238 und verhindert so, dass das Längsträgerglied 32 durch Abheben verloren geht. Hierbei ist zweckmäßigerweise vorgesehen, dass der Schwenkwinkel des Lenkers 260 nur so groß ist, wie dies für die Nachstellung des Längsträgergliedes 32 erforderlich ist, beispielsweise durch seitliche Schenkel des Tragrahmens 238 oder an dem Tragrahmen 238 vorgesehene Anschlagflächen. Der Lenker 260 kann auch sehr kurz ausgebildet sein. Da die mittlere Verstellposition des Längsträgergliedes 32 zugleich die am weitesten angehobene Position ist, kann das Längsträgergliedes 32 an seiner Unterseite mit einem Federglied, das auf der Basis des Tragrahmens 238 ruht, in die mittlere Position vorgespannt sein, so dass dieses Federglied gespannt werden muss, wenn das Längsträgerglied 32 aus der mittleren Position heraus verstellt werden soll. Ein Federglied bildet dann den Widerstand für ein Auslenken in beide Richtungen.

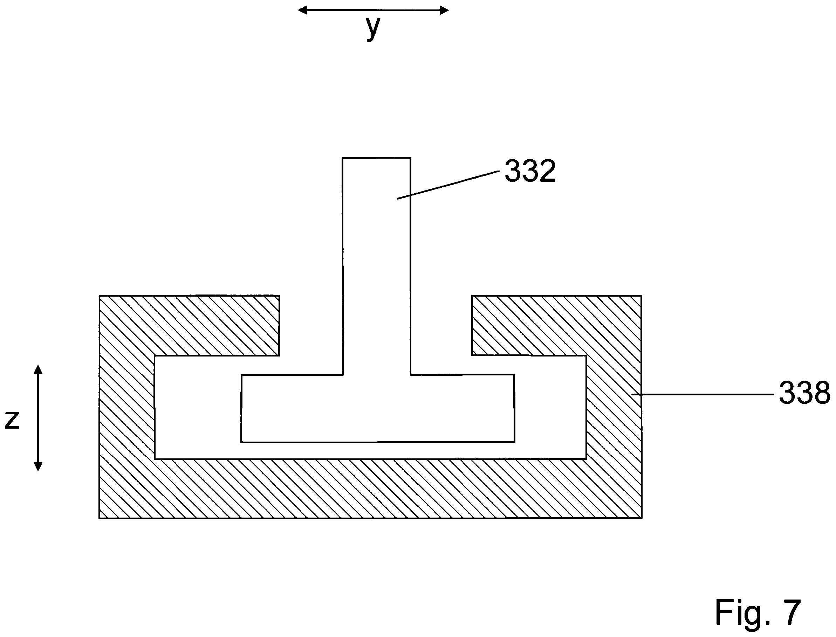

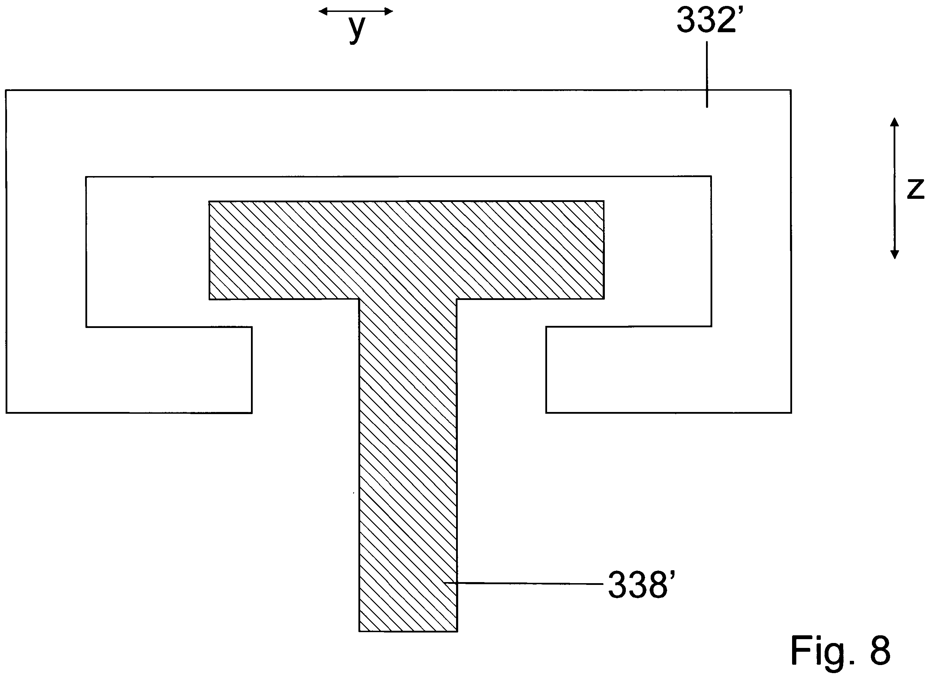

Fig. 7 und Fig. 8 zeigen schematisch, dass es verschiedene Möglichkeiten gibt, den Tragrahmen 338, 338' und das Längsträgerglied 332, 332' so zu koppeln, dass das Längsträgerglied 332, 332' in y-Richtung verstellbar ist, und in z-Richtung nicht abgehoben werden kann. Hierbei ist es nicht erforderlich, den Tragrahmen 338 als das das Längsträgerglied 332 umgreifende Teil wie in Fig. 7 dargestellt zu verwirklichen, es kommt auch ein Umgreifen des Längsträgerglieds 332' um den Tragrahmen 338' in Betracht. Man erkennt, dass an das Längsträgerglied 332, 332' beliebige Profile anschließbar sind, die für die Verlagerung verschiedenster Schlitten ausgeführt sein können, und dass damit auch verschiedenste Abdeckungen vorgesehen sein können. Ist beispielsweise die Führungsrolle zwischen zwei Wandungen eine Kammer des Längsträgerglieds 332 angeordnet, kann diese eine Kraft in y-Richtung auf das Längsträgerglied 332 übertragen, ohne dass hierzu die Führungsrolle Kräfte in y-Richtung übertragen muss.

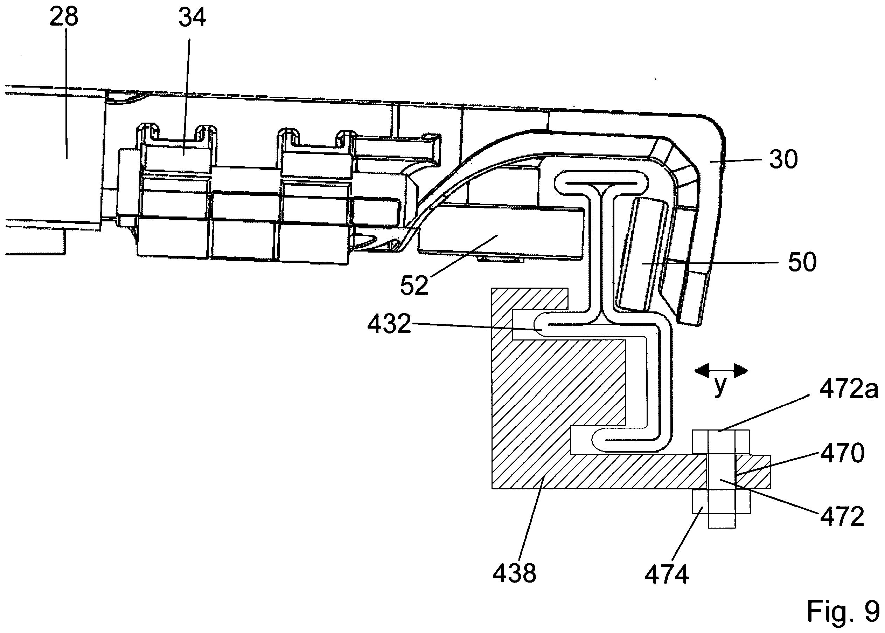

Fig. 9 zeigt ein weiteres Ausführungsbeispiel, wobei dieselben Bezugszeichen wie bei dem Ausführungsbeispiel gemäß Fig. 1 bis 3 dieselben oder strukturell vergleichbare Teile bezeichnen.

Im Unterschied zu dem Ausführungsbeispiel gemäß Fig. 1 bis 3 ist das Längsträgerglied 432 so ausgebildet, dass es auch nach Fertigstellung des Unterbaus 12 von der Seite, vorliegend von der Außenseite, in einen komplementär ausgeformten Tragrahmen 438 eingeschoben werden kann. Der Tragrahmen 438 ist hierzu einseitig offen ausgebildet und weist Bohrungen 470 auf, die nach dem Einsetzen des Längsträgerglieds 432 von einem Bolzen 472 mit einem Kopf 472a durchsetzt werden und mit einer Mutter 474 an dem Tragrahmen 438 festgelegt werden können. Der Kopf 472a bildet einen äußeren Anschlag für die Verlagerung des Längsträgerglieds 432 in y-Richtung, während der Tragrahmen 438 einen inneren Anschlag für die Verlagerung des Längsträgerglieds 432 in y-Richtung bildet. Es ist hierbei nicht erforderlich, Federglieder zum Vorspannen des Längsträgerglieds 432 vorzusehen.

Der Vorteil des Ausführungsbeispiel gemäß Fig. 9 liegt vor allem darin, dass das Längsträgerglied 432 nicht axial in den Tragrahmen 438 eingeschoben zu werden braucht, was wegen der engen Toleranzen und der Durchbiegung schwierig sein kann, sondern dass ein Einsetzen von außen möglich ist. Gerade wenn nur ein Teilstück des Längsträgerglieds 432 ausgetauscht werden soll, ist dies wesentlich effektiver. Zugleich können Wasser und Dreck gut nach außen weggeleitet werden.

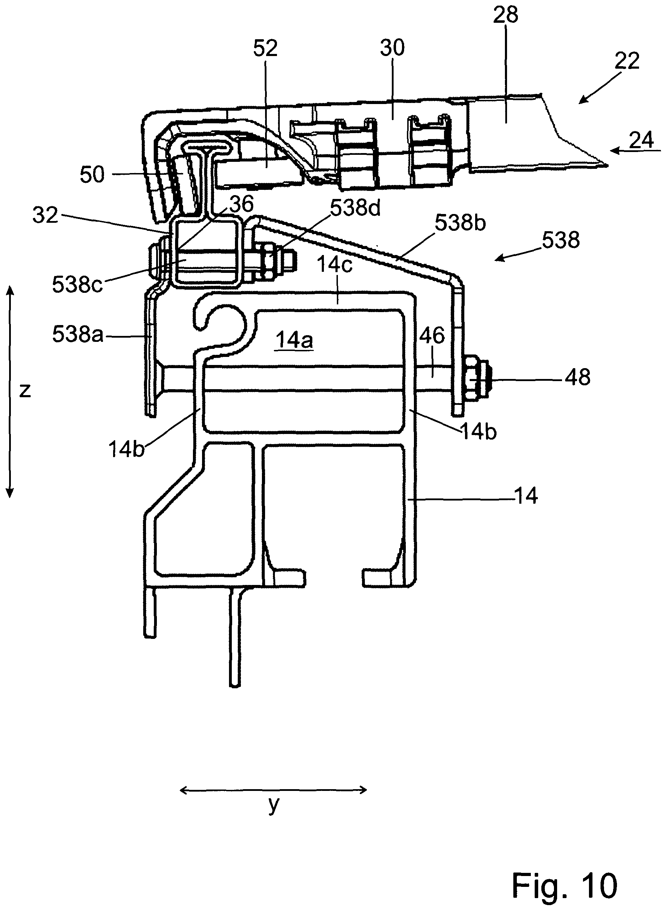

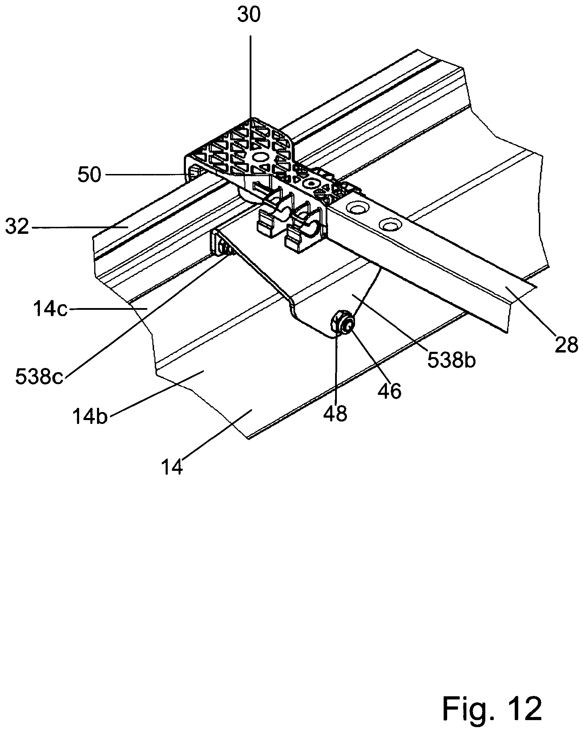

Fig. 10 bis 12 zeigen eine weitere alternative Ausführungsform, bei der dieselben Bezugszeichen wie bei der Ausführungsform gemäß Fig. 1 bis 3 dieselben oder strukturell vergleichbare Teile bezeichnen.

Im Unterschied zu dem Ausführungsbeispiel gemäß Fig. 1 bis 3 ist nicht das Längsträgerglied 32 über einen Bolzen beweglich an einem fest an dem Unterbau angeschlossenen Tragrahmen angeschlossen, sondern der Tragrahmen 538 ist fest mit dem Längsträgerglied 32 verbunden. Das Längsträgerglied 32 ist gemeinsam mit dem Tragrahmen 538 in eine Richtung y quer zu der Verlagerungsrichtung der Schlitten 30 verstellbar angeordnet. Im Ergebnis kann das Längsträgerglied 32 quer zu der Verlagerungsrichtung der Schlitten 30 hin und her verlagert werden und damit den von den Spriegeln beziehungsweise Holmen 28 eingeleiteten Kräften folgen.

Günstigerweise weist die Seitenwand 14 hierbei eine obere Kammer 14a auf, deren beide seitliche Begrenzungswandungen 14b mit einer horizontalen Bohrung ausgestattet sind, die von einem Schraubenbolzen 46 durchsetzt werden. Der Schraubenbolzen 46 ist Teil des Tragrahmens 538, der einen gestuften außenseitigen Beschlag 538a und einen V-förmigen Bügel 538b umfasst, wobei der Bolzen 46 eine Bohrung in dem Beschlag 538a durchsetzt und weiter eine Bohrung in dem Bügel 538b durchsetzt und mit einer Mutter 48 an diesen festgelegt ist. Der Beschlag 538a und der Bügel 538b sind als Blechbiegeteile aus Metall ausgebildet und weisen eine ausreichende Steifigkeit auf, um unter der Belastung des Verdeckgestells nicht auszuknicken.

Der Bolzen 46 ist hierbei vorzugsweise im Bereich seiner Anlage mit dem Bügel 538b gestuft, um zu verhindern, dass der Bolzen 46 eine Relativbewegung bezüglich des Beschlages 538a und/oder des Bügels 538b ausführen kann. Der Schraubenbolzen 46 ist zylindrisch ausgebildet und in den zylindrischen Bohrungen in den Seitenwandungen 14b der Kammer 14a hin und her bewegbar. Der Bolzen 46 und die Bohrungen stellen damit eine definierte axiale Führung sicher.

Der Bügel 538b umfasst eine in Fig. 10 schräg dargestellte Basis und zwei lotrechte Schenkel, von denen der größere Schenkel von dem Schraubenbolzen 46 durchsetzt ist. Ein weiterer Verbindungsbolzen 538c verbindet ein oberes Ende des Beschlags 538a und den kurzen Schenkel des Bügels 538b mit dem Längsträgerglied 32 an dessen jeweils nach Außen weisenden seitlichen Wandungen, indem der Verbindungsbolzen 538c durch Bohrungen 36 dieser Teile hindurch geführt und mit einer Mutter 538d fixiert ist. Der Verbindungsbolzen 538c lässt kein Spiel zwischen dem Längsträgerglied 32 und dem Tragrahmen 538 zu, es ist aber möglich, ein kleines Spiel und damit eine zusätzliche Beweglichkeit in y-Richtung zu ermöglichen.

Rollt nun der Schlitten 30 entlang dem T-förmigen oberen Teil des Längsträgerglieds 32 ab, verlagert sich Längsträgerglied 32 gemeinsam mit dem Tragrahmen 538 in y-Richtung, indem der Bolzen 46 gemeinsam mit dem Tragrahmen 538 und dem Längsträger 32 in den Bohrungen in den Seitenwandungen 14b hin oder her verschoben wird.

Vorteil dieser Konfiguration ist insbesondere, dass eine bestehende Seitenwandung 14 nicht wesentlich erhöht werden muss, sondern vielmehr einfach nur durch Anbringen von Bohrungen mit dem Bolzen 46 ausgestattet werden kann. Hierdurch erhöht sich die Bauhöhe des Aufbaus in kaum spürbarer Weise. Zudem stellt die von den seitlichen Wandungen 14b der Kammer 14a getragene obere Wandung 14c des Unterbaus 14 eine Auflagefläche dar, auf der bei starker Belastung das Längsträgerglied 32, das einen definierten Abstand hierzu hält, zum Aufliegen kommen kann, sodass es nicht zu einer Deformation des Tragrahmens 538 kommt.

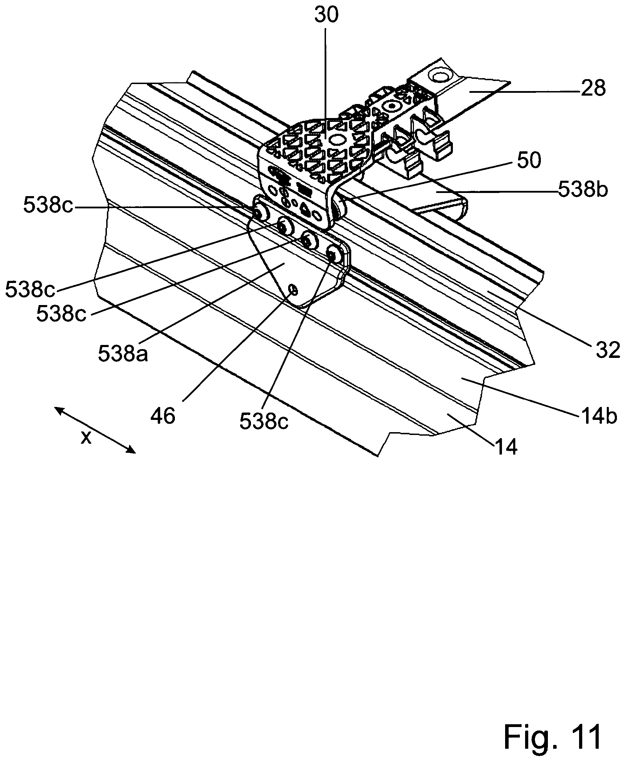

Es versteht sich, dass auch anders gestaltete Längsträgerglieder 32 an den Tragrahmen 538 angeschlossen werden können. Es versteht sich ferner, dass eine Mehrzahl von Tragrahmen 538 mit dem Längsträgerglied 32 verbunden sind und dementsprechend die Kammer 14a bzw. die darin vorgesehenen Bohrungen an mehreren Stellen jeweils einen Schraubenbolzen 46 axial verschieblich aufnimmt. Man erkennt insbesondere in Fig. 11, dass mehrere Verbindungsbolzen 538c das Längsträgerglied 32 zur Verbindung mit dem Tragrahmen 538 beziehungsweise dem Beschlag 538a und dem Bügel 538b durchsetzen, sodass die relativ starke Momentenbeanspruchung nicht zu einer Deformation des Tragrahmens 538 führen kann.

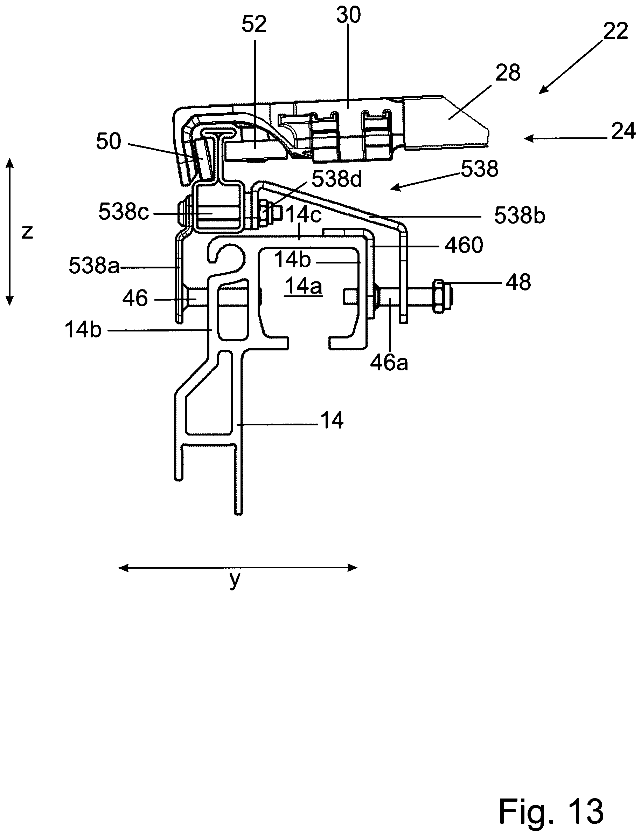

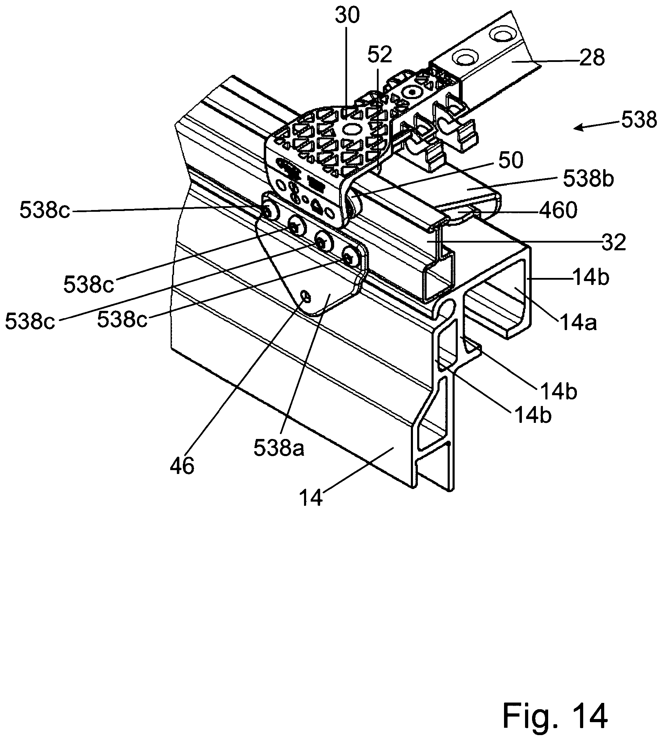

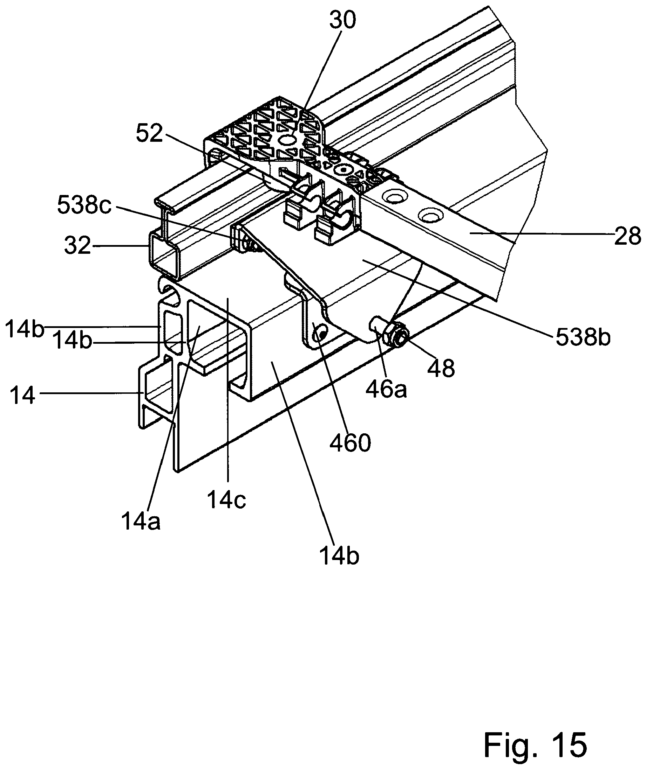

Fig. 13 bis 15 zeigen eine Abwandlung der Ausführungsform gemäß Fig. 10 bis 12, wobei dieselben Bezugszeichen wie bei dem Ausführungsbeispiel gemäß Fig. 10 bis 12 dieselben oder strukturell vergleichbare Teile bezeichnen.

Im Unterschied zu dem Ausführungsbeispiel aus Fig. 10 bis 12 ist nicht ein durchgehender Schraubenbolzen 46 vorgesehen, mit dem der Tragrahmen 538 an die obere Kammer 14a der Seitenwand 14 angeschlossen wird, sondern diese Funktion ist auf zwei Schraubenbolzenstummel 46, 46a verteilt, von denen der erste Schraubenbolzenstummel 46 eine seitliche Wandung 14b der Seitenwand 14 verschiebbar durchsetzt und fest mit dem Beschlag 538a verbunden ist, während der weitere Schraubenbolzenstummel 46a den Bügel 538b bzw. eine im Bereich von dessen langem Schenkel vorgesehene Bohrung verschiebbar durchsetzt.

Der Beschlag 538a ist hierbei mit dem Schraubenbolzenstummel 46 fest verbunden, sodass die Bewegung in y-Richtung im Wesentlichen durch eine hin und her Bewegung des Schraubenbolzenstummels 46 in entsprechenden Bohrungen in den seitlichen Wandungen 14b der Seitenwand 14 erfolgt, von denen in dem dargestellten Ausführungsbeispiel zwei Wandungen 14b durchsetzt sind.

Im Unterschied hierzu ist der Schraubenbolzenstummel 46a, der den Bügel 538b durchsetzt, fest mit der Wandung 14b verbunden, beispielsweise durch Schweißen oder Vernieten, und ermöglicht eine Verlagerung in einer Bohrung in dem Schenkel des Bügels 538b entlang des Schraubenbolzenstummels 46a. Der Verlagerungsweg ist durch den kürzeren der beiden Schraubenbolzenstummel 46, 46a begrenzt, gleichwohl ist eine Mutter 48 auf den einen Schraubenbolzenstummel 46a aufgebracht, um einen Endanschlag für den Tragrahmen 538 bereitzustellen.

Man erkennt, dass in dem vorliegenden Ausführungsbeispiel der nach Innen weisende Schraubenbolzenstummel 46a Teil der Seitenwand 14b ist, da mit dieser unverschieblich verbunden, und nicht zu dem Tragrahmen 538 gehört.

Man erkennt ferner, dass anstelle eines zylindrischen Bolzen auch ein Bolzen mit polygonalem Querschnitt eingesetzt werden kann, wenn die Bohrung entsprechend beschaffen ist, dass eine gegenseitige Führung gegeben ist.

Man erkennt überdies, dass die Führung sowohl am bewegten Teil als auch am unbeweglichen Teil ausgebildet sein kann.

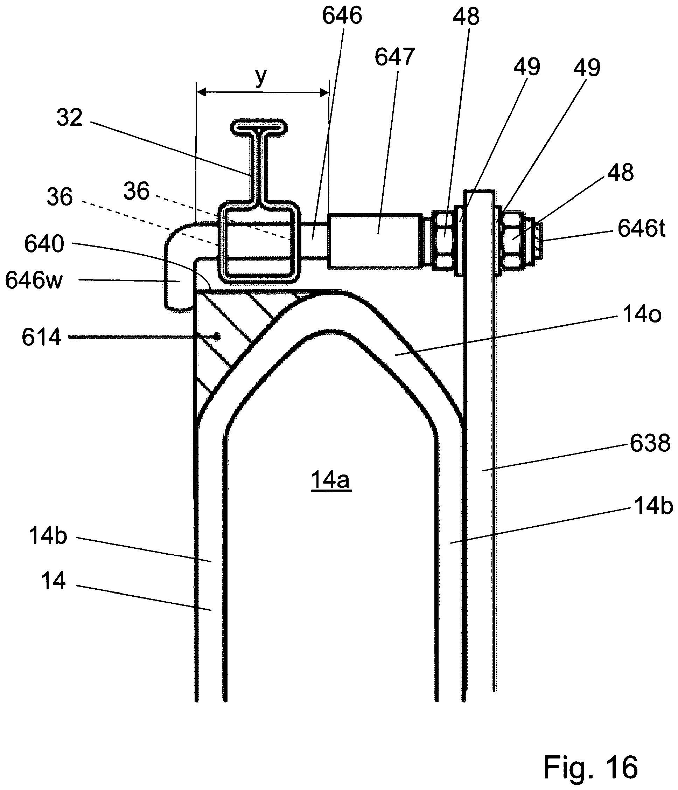

Fig. 16 zeigt eine weitere alternative Ausführungsform, bei der dieselben Bezugszeichen wie bei der Ausführungsform gemäß Fig. 1 bis 3 dieselben oder strukturell vergleichbare Teile bezeichnen.

Die Seitenwand 14 weist eine obere Kammer 14a auf, die von zwei Begrenzungswandungen 14b umschlossen ist. Eine obere Wandung 14o der Kammer 14a weist ein abgerundetes oder polygonales Profil auf, das keine ausreichend breite Unterlage bereitstellt, auf der das Längsträgerglied 32 aufliegen könnte, um zu vermeiden, dass Schläge von oben die Seitenwand 14 beschädigen. Daher ist abschnittsweise an der Seitenwand 14 eine Konsole 614 angeschlossen, die stellenweise eine flache Oberseite bzw. einen Basisabschnitt 640 bereitstellt.

An der inneren Begrenzungswandung 14b der Seitenwand 14 ist ein Tragrahmenstück 638 angeschraubt, angenietet oder angeschweißt, das über die maximale Höhe der oberen Wandung 14o hinausreicht. Im Bereich des Überstands ist an dem Tragrahmenstück 638 eine Bohrung vorgesehen, die von einem Bolzen 646 durchsetzt wird. Der Bolzen 646 weist an seinem einen Ende einen Gewindeabschnitt 646t auf, der in der Bohrung verschiebbar ist und dann mittels zweier Muttern 48 an dem Tragrahmenstück 638 festgelegt werden kann. Das andere Ende des Bolzens 646 ist mit einem abgewinkelten Ende 646w ausgebildet, kann aber auch mit einem Nietkopf oder mit einer Mutter begrenzt sein.

Vor dem Festlegen des Bolzens 646 an dem Tragrahmenstück 638 wird das Längsträgerglied 32 mittels zweier Bohrungen 36 auf den Bolzen aufgeschoben. Ferner wird ein Distanzstück 647 auf den Bolzen 646 geschoben, der den Verstellweg y des Längsträgerglieds 32 bezüglich des Bolzens begrenzt, so dass der untere Abschnitt des Längsträgerglieds 32 nur noch zwischen dem abgewinkelten Ende 646w und dem Distanzstück 647 verstellbar ist. Hierbei ist der Abstand des unteren Teils des Längsträgerglieds 32 von der Konsole 614 recht gering, so dass im Falle einer großen Belastung, z.B. durch einen Schlag, die Konsole 614 das Längsträgerglied 32 abstützt. Man erkennt, dass das Tragrahmenstück 638 und der hiermit gekoppelte Bolzen eine stabile und einfach nachrüstbare Führung für die Verstellung des Längsträgerglieds 32 bilden. Man erkennt ferner, dass es nicht zwingend ist, den Bolzen 646 beidseitig zu lagern, sondern dass eine einseitige Lagerung ausreicht. Man erkennt ferner, dass es nicht zwingend ist, den Tragrahmen als durchgehendes Profil über die Länge des Längsträgerglieds 32 vorzusehen, sondern dass es ausreicht, wenn der Tragrahmen abschnittsweise an dem Unterbau angeordnet ist.

Anhand der Fig. 16 kann ein einfaches und zuverlässiges Verfahren zum Ausstatten eines Unterbaus 12, vorliegend einer Seitenwand 14 des Unterbaus 12, mit einem öffnungsfähigen Aufbau 10 illustriert werden. Hierzu wird ein bezüglich des Unterbaus 12 stufenlos verstellbares und nicht arretierbares Längsträgerglied 32 derart mittels mehrerer Bolzen 346 und eines oder mehrerer Tragrahmenstücke 638 an den Unterbau angeschlossen, wobei das Längsträgerglied 32 einen definierten freien Verstellweg y quer bzw. senkrecht zu seiner in die Papierebene reichenden Haupterstreckung aufweist. Wird jeweils ein Tragrahmen 638, 646 mit verstellbaren Längsträgerglied 32 an jeder der Innenseiten der gegenüberliegenden Seitenwandungen 14 angeschlossen, kann das Schiebedach 22 entlang der Längsträgerglieder 32 verlagert werden, die sich dann so verstellen, dass der Abstand der Längsträgerglieder 32 der Abmessung des Schiebedachs entspricht.

Die Erfindung ist vorstehend anhand von Ausführungsbeispielen erläutert worden, bei denen das Längsträgerglied 32 alleine oder mit angeschlossenen Teilen auf einem Bolzen quer zu seiner Haupterstreckung verstellbar ist. Es versteht sich, dass der Bolzen auch mit dem Längsträgerglied verbunden sein kann und so das Längsträgerglied bezüglich einer Bohrung verstellbar ist. Ferner versteht sich, dass der Bolzen zwar beidendig festgelegt sein kann, es aber ausreicht, wenn er nur an einem Ende festgelegt ist.

Die Erfindung ist vorstehend anhand von Ausführungsbeispielen erläutert worden, bei denen das Längsträgerglied 32 beidseitig mittels Schraubenfedern 54 auf eine mittlere Verstellposition hin belastet ist. Es versteht sich, dass auch andere Ausführungen von Federgliedern hierfür eingesetzt werden können, und dass auch eine nur einseitige Belastung des Längsträgerglieds 32 möglich ist. Ferner können statt Druckfedern auch Zugfedern vorgesehen sein. Besonders günstig werden solche Federglieder eingesetzt, die in der zentralen Verstellposition des Längsträgerglieds vollständig oder nahezu vollständig entspannt sind, so dass es selbst bei Bruch eines Federgliedes nicht zu einer Verlagerung des Längsträgerglieds 32 in die entgegengesetzte Richtung kommt.

Die Erfindung ist vorstehend anhand eines Ausführungsbeispiels erläutert worden, bei dem der öffenbare Aufbau 10 die Oberseite und damit ein Dach des Unterbaus 12 verschließt. Es versteht sich, dass in entsprechender Weise auch eine Seiten- oder Hecköffnung des Unterbaus 12 verschlossen werden kann, wobei dann die Verlagerung des Längsträgerglieds 32 im Wesentlichen in die zur Verlagerung der Schlitten 30 senkrechte z-Richtung erfolgt.

Die Erfindung ist vorstehend anhand eines Ausführungsbeispiels erläutert worden, bei dem das Verdeckgestell zwei verstellbare Längsträgerglieder 32 an jeder Seite 14 des Unterbaus 12 aufweist. Es versteht sich, dass es auch schon ausreichen kann, nur eine Seite mit einem verstellbaren Längsträgerglied 32 auszustatten, während das Längsträgerglied auf der anderen Seite ortsfest und nicht verstellbar ist.

Die Erfindung ist vorstehend anhand von Ausführungsbeispielen erläutert worden, bei denen die Vertstellung des Längsträgerglieds 32 im Wesentlichen in y-Richtung, also senkrecht zu der Verlagerungsrichtung der Schlitten in x-Richtung erfolgt. Es versteht sich, dass es ausreicht, wenn die Verstellung des Längsträgerglieds quer zu der Verlagerungsrichtung der Schlitten erfolgt, und dass insbesondere Komponenten der beiden anderen Richtungen die Verstellrichtung zusammensetzen können.

Die Erfindung ist vorstehend anhand von Ausführungsbeispielen erläutert worden, bei denen der Unterbau 12 emporstehende Seiten- und Stirnwände 14, 16, 18 aufweist. Es versteht sich, dass der Unterbau 12 auch nur aus einer weitgehend flachen Ebene bestehen kann, beispielsweise der Ladepritsche eines Sattelaufliegers, und dass der Aufbau dann im Wesentlichen einen Dreidimensionalen Raum umschließt, wie dies beispielsweise bei Schiebebügelverdecken der Fall ist.

Die Erfindung ist vorgehend anhand von Ausführungsbeispielen erläutert worden, bei denen das Längsträgerglied 32 passiv in Reaktion auf die von den Schlitten 30 eingeleiteten Kräfte ausgelenkt werden. Es versteht sich, dass die von den Schlitten 30 eingeleiteten Kräfte auch gemessen werden können, und das Längsträgerglied in Reaktion hierauf motorisch in seiner Lage verstellt wird, um eine optimale Stellung einzunehmen.

Die Erfindung ist vorstehend anhand von Ausführungsbeispielen erläutert worden, bei denen der Tragrahmen 38 das Längsträgerglied 32 übergreift und damit das Längsträgerglied 32 an einem Abheben hindert. In gleicher Weise kann aber auch das Längsträgerglied den Tragrahmen übergreifen, wie z.B. in Fig. 8 angedeutet, mit dem weiteren Vorteil, dass kein von oben herabfallender Schmutz oder Regenwasser in den Bereich zwischen Längsträgerglied 32 und Tragrahmen 38 gelangen kann.

Die Erfindung ist vorstehend anhand von Ausführungsbeispielen erläutert worden, bei denen die relativbewegliche Verbindung von Längsträgerglied 32 und von Unterbau 14 durch einen mit einem der beiden fest oder beweglich gekoppelten Tragrahmen 38, 538 vermittelt wird. Es versteht sich, dass der Tragrahmen auch baueinheitlich mit einem der beiden Teile Längsträgerglied 32 und Unterbau 14 ausgebildet sein kann, so dass der Tragrahmen gar nicht als gesondertes Teil mehr vorgesehen ist. Entsprechend ist das Vorsehen eines Tragrahmens bevorzugt, aber optional.

## Patentansprüche

1. Öffnungsfähiger Aufbau für einen Unterbau (12), wie einen Lastkraftwagen, Anhänger, Auflieger, Bahnwaggon, Muldenkipper oder Container, umfassend
ein Verdeckgestell (24), an dem beispielsweise eine Plane (26) aus wetterbeständigem Material oder eine Mehrzahl gelenkig koppelbarer Wandungselemente anschließbar ist,
wobei das Verdeckgestell (24) eine Mehrzahl von Schlitten (30) aufweist, die entlang wenigstens einer Führung (32, 38) verlagerbar sind,
wobei die Führung ein Längsträgerglied (32) umfasst, entlang dem die Schlitten (30) verlagerbar sind,
**dadurch gekennzeichnet,**
**dass** das Längsträgerglied (32) zumindest abschnittsweise in einer Richtung (y) quer zu der Verlagerungsrichtung (x) der Schlitten (30) verstellbar angeordnet ist.

2. Öffnungsfähiger Aufbau nach Anspruch 1, **dadurch gekennzeichnet, dass** das Längsträgerglied (32) ein langgestrecktes Profil wie z.B. eine Schiene ist.

3. Öffnungsfähiger Aufbau nach einem der vorhergehenden Ansprüche, **dadurch gekennzeichnet, dass** die Führung einen Tragrahmen (38; 138; 238; 538; 638) umfasst.

4. Öffnungsfähiger Aufbau nach Anspruch 3, **dadurch gekennzeichnet, dass** das eine von Unterbau (12; 14) und Längsträgerglied (32) mit dem Tragrahmen (38; 138; 238; 538; 638) verbunden ist, und dass das andere von Unterbau (12; 14) und Längsträgerglied (32) in eine Richtung (y) quer zu der Verlagerungsrichtung (x) der Schlitten (30) verstellbar mit dem Tragrahmen (38; 138; 238; 538; 638) gekoppelt ist.

5. Öffnungsfähiger Aufbau nach Anspruch 3 oder 4, **dadurch gekennzeichnet, dass** das Längsträgerglied (32) in dem Tragrahmen (38; 138; 238) aufgenommen ist.

6. Öffnungsfähiger Aufbau nach Anspruch 3 oder 4, **dadurch gekennzeichnet, dass** der Tragrahmen (538; 638) an dem Unterbau (12) verstellbar angeschlossen ist.

7. Öffnungsfähiger Aufbau nach einem der Ansprüche 3 bis 6, **dadurch gekennzeichnet, dass** der Tragrahmen (38; 538) an dem Unterbau (12) oder an dem Längsträgerglied (32) festgelegt oder mit diesem gemeinsam ausgebildet ist.

8. Öffnungsfähiger Aufbau nach einem der Ansprüche 3 bis 7, **dadurch gekennzeichnet, dass** der Tragrahmen (38) mit dem Längsträgerglied (32) oder mit dem Unterbau (12) über ein eine Relativbewegung zulassendes Koppelteil (46; 46a; 60; 260; 646) verbunden ist.

9. Öffnungsfähiger Aufbau nach Anspruch 8, **dadurch gekennzeichnet, dass** das Koppelteil ein Bolzen (46; 646) ist, der an dem Tragrahmen (38; 638) festgelegt ist und entlang dem das Längsträgerglied (32) verstellbar ist.

10. Öffnungsfähiger Aufbau nach Anspruch 8, **dadurch gekennzeichnet, dass** das Koppelteil ein Lenker (60; 260) ist, der gelenkig mit dem Tragrahmen (138; 238) und gelenkig mit dem Längsträgerglied (32) verbunden ist.

11. Öffnungsfähiger Aufbau nach Anspruch 8, **dadurch gekennzeichnet, dass** das Koppelteil ein an einem von Tragrahmen (38) und Längsträgerglied (32) vorgesehener Vorsprung ist, der in einer Nut des anderen von Tragrahmen (38) und Längsträgerglied (32) verschiebbar eingesetzt ist.

12. Öffnungsfähiger Aufbau nach Anspruch 8, **dadurch gekennzeichnet, dass** das Koppelteil ein an einem von Tragrahmen (38) und Längsträgerglied (32) vorgesehenes Rollelement oder Gleitelement ist.

13. Öffnungsfähiger Aufbau nach Anspruch 8, **dadurch gekennzeichnet, dass** das Koppelteil ein Bolzen (46) ist, der an dem Tragrahmen (538) festgelegt ist und der bezüglich des Unterbaus (12; 14), insbesondere durch eine Bohrung des Unterbaus (12; 14), verstellbar ist.

14. Öffnungsfähiger Aufbau nach Anspruch 8, **dadurch gekennzeichnet, dass** das Koppelteil ein Bolzen (46a; 646) ist, der an dem Unterbau (12; 14) festgelegt ist und bezüglich dem der Tragrahmen (538; 638). insbesondere mittels einer Bohrung des Tragrahmen (538; 638), verstellbar ist.

15. Öffnungsfähiger Aufbau nach Anspruch 8, **dadurch gekennzeichnet, dass** das Koppelteil eine an einem von Tragrahmen (38) und Längsträgerglied (32) vorgesehene Mutter ist, die auf einer an dem anderen von Tragrahmen (38) und Längsträgerglied (32) vorgesehenen Gewinde-, Spindel oder Kugelumlaufspindelstange axial verlagerbar ist.

16. Öffnungsfähiger Aufbau nach einem der Ansprüche 8 bis 15, **dadurch gekennzeichnet, dass** das Koppelteil von zumindest einer Vorspanneinrichtung in oder entgegen einer Verstellrichtung des Längsträgerglieds (32) belastet ist.

17. Öffnungsfähiger Aufbau nach einem der Ansprüche 3 bis 16, **dadurch gekennzeichnet, dass** der Tragrahmen (38) zumindest einen Abschnitt des Längsträgergliedes (32) übergreift und damit verhindert, dass das Längsträgerglied (32) von dem Unterbau (12) abgehoben werden kann.

18. Öffnungsfähiger Aufbau nach einem der vorhergehenden Ansprüche, **dadurch gekennzeichnet, dass** das Längsträgerglied (32) durch wenigstens ein Federelement (54) in eine Ausgangslage vorgespannt ist.

19. Öffnungsfähiger Aufbau nach Anspruch 18, **dadurch gekennzeichnet, dass** beiderseits des Längsträgerglieds (32) jeweils ein Federelement (54) angeordnet ist, und dass die Federelemente (54) das Längsträgerglied (32) in Richtung auf eine voreinstellbare Ausgangslage vorspannen.

20. Öffnungsfähiger Aufbau nach einem der vorhergehenden Ansprüche, **dadurch gekennzeichnet, dass** die Richtung quer zu der Verlagerungsrichtung (x) der Schlitten (30) eine horizontale Komponente (y) umfasst und/oder eine vertikale Komponente (z) umfasst.

21. Öffnungsfähiger Aufbau nach einem der vorhergehenden Ansprüche, **dadurch gekennzeichnet, dass** das Längsträgerglied (32) zumindest eine Bahn für eine vertikale Kräfte aufnehmende Tragrolle (50) des Schlittens (30) und zumindest eine Bahn für eine horizontale Kräfte aufnehmende Führungsrolle (52) des Schlittens (30) aufweist, und dass die Kraft zur Verstellung der Längsträgerglieder (32) durch die Verlagerung der Schlitten (30) entlang der Längsträgerglieder (32) übertragen wird.

22. Nutzfahrzeug, Container oder wannenförmiges Bauwerk, enthaltend einen öffnungsfähigen Aufbau (10) nach einem der vorhergehenden Ansprüche.

23. Verfahren zum Verlagern eines öffnungsfähigen Aufbaus (10), insbesondere eines öffnungsfähigen Dachs, einer öffnungsfähigen Seitenwand oder einer öffnungsfähigen Abdeckung,
bei dem an einem Unterbau (12) jeweils ein erstes Führungselement (32) und ein zweites Führungselement (32) angeordnet ist,
bei dem Teile (30) eines Gestells (24) des Aufbaus (10) entlang einem der Führungselemente (32) in eine primäre Verlagerungsrichtung (x) verlagert werden können, um eine Öffnung des Unterbaus (12) freizugeben oder zu verschließen,
**dadurch gekennzeichnet,**
**dass** die Führungselemente (32) unabhängig voneinander quer zu der primären Verlagerungsrichtung (x) in eine Ausweichrichtung (y) verstellbar sind.

## Claims

1. Openable superstructure for a substructure (12), such as a truck, trailer, semitrailer, railway wagon, dumper truck, or container, comprising
a folding-top framework (24) to which, for example, a tarpaulin (26) made of weather-resistant material or a plurality of hingedly couplable wall elements can be connected,
wherein the folding-top framework (24) has a plurality of carriages (30) which are displaceable along at least one guide (32, 38),
wherein the guide comprises a longitudinal beam member (32) along which the carriages (30) are displaceable,
**characterized in**
**that** the longitudinal beam member (32) is adjustably arranged at least in sections in a direction (y) transverse to the displacement direction (x) of the carriages (30).

2. Openable superstructure according to claim 1, **characterized in that** the longitudinal beam member (32) is an elongated profile such as a rail.

3. Openable superstructure according to any of the preceding claims, **characterized in that** the guide comprises a support frame (38; 138; 238; 538; 638).

4. Openable superstructure according to claim 3, **characterized in that** one of the substructure (12; 14) and the longitudinal beam member (32) is connected to the support frame (38; 138; 238; 538; 638), and that the other of the substructure (12; 14) and the longitudinal beam member (32) is adjustably coupled to the support frame (38; 138; 238; 538; 638) in a direction (y) transverse to the displacement direction (x) of the carriage (30).

5. Openable superstructure according to claim 3 or 4, **characterized in that** the longitudinal beam member (32) is received in the support frame (38; 138; 238).

6. Openable superstructure according to claim 3 or 4, **characterized in that** the support frame (538; 638) is adjustably connected to the substructure (12).

7. Openable superstructure according to any of claims 3 to 6, **characterized in that** the support frame (38; 538) is fixed or formed integrally on the substructure (12) or on the longitudinal beam member (32).

8. Openable superstructure according to any of claims 3 to 7, **characterized in that** the support frame (38) is connected to the longitudinal beam member (32) or to the substructure (12) via a coupling part (46; 46a; 60; 260; 646) which permits a relative movement.

9. Openable superstructure according to claim 8, **characterized in that** the coupling part is a bolt (46; 646) which is fixed to the support frame (38; 638) and along which the longitudinal beam member (32) is adjustable.

10. Openable superstructure according to claim 8, **characterized in that** the coupling part is a link (60; 260) which is hingedly connected to the support frame (138; 238) and is hingedly connected to the longitudinal beam member (32).

11. Openable superstructure according to claim 8, **characterized in that** the coupling part is a projection provided on one of the support frame (38) and the longitudinal beam member (32) which is movably inserted in a groove in the other of the support frame (38) and the longitudinal beam member (32).

12. Openable superstructure according to claim 8, **characterized in that** the coupling part is a rolling element or a sliding element provided on one of the support frame (38) and the longitudinal beam member (32).

13. Openable superstructure according to claim 8, **characterized in that** the coupling part is a bolt (46) which is fixed to the support frame (538) and which is adjustable relatively to the substructure (12; 14), in particular by means of a bore in the substructure (12; 14).

14. Openable superstructure according to claim 8, **characterized in that** the coupling part is a bolt (46a; 646) which is fixed to the substructure (12; 14) and with respect to which the support frame (538; 638) is adjustable, in particular by means of a bore in the support frame (538; 638).

15. Openable superstructure according to claim 8, **characterized in that** the coupling part is a nut provided on one of the support frame (38) and the longitudinal beam member (32), which is axially displaceable on a threaded rod, spindle rod, or ball screw spindle rod provided on the other of the support frame (38) and the longitudinal beam member (32).

16. Openable superstructure according to any of claims 8 to 15, **characterized in that** the coupling part is loaded by at least one pretensioning device in or against an adjustment direction of the longitudinal beam member (32).

17. Openable superstructure according to any of claims 3 to 16, **characterized in that** the support frame (38) overlaps at least a portion of the longitudinal beam member (32) and thus prevents the longitudinal beam member (32) from being lifted off the substructure (12).

18. Openable superstructure according to any of the preceding claims, **characterized in that** the longitudinal beam member (32) is prestressed into an initial position by at least one spring element (54).

19. Openable superstructure according to claim 18, **characterized in that** a spring element (54) is arranged on both sides of the longitudinal beam member (32), and that the spring elements (54) prestress the longitudinal beam member (32) in a direction of a presettable initial position.

20. Openable superstructure according to any of the preceding claims, **characterized in that** the direction transverse to the displacement direction (x) of the carriages (30) comprises a horizontal component (y) and/or a vertical component (z).

21. Openable superstructure according to any of the preceding claims, **characterized in that** the longitudinal beam member (32) has at least one track for a support roller (50) of the carriage (30) which absorbs vertical forces and at least one track for a guide roller (52) of the carriage (30) which absorbs horizontal forces, and that the force for the adjustment of the longitudinal beam members (32) is transmitted by the displacement of the carriages (30) along the longitudinal beam members (32).

22. Commercial vehicle, container or trough-shaped construction comprising an openable superstructure (10) according to any of the preceding claims.

23. Method for displacing an openable superstructure (10), in particular an openable roof, an openable side wall, or an openable cover,
in which a first guide element (32) and a second guide element (32) are arranged on a substructure (12),
in which parts (30) of a framework (24) of the superstructure (10) can be displaced along one of the guide elements (32) in a primary displacement direction (x) in order to open or close an opening in the substructure (12), **characterized in**
**that** the guide elements (32) can be adjusted independently of one another transversely to the primary displacement direction (x) in a deviation direction (y).

## Revendications

1. Structure ouvrante destinée à une sous-structure (12) telle qu'un camion, une remorque, une semi-remorque, un wagon ferroviaire, un camion à benne basculante ou un conteneur, ladite structure ouvrante comprenant
un châssis (24) à toit rabattable auquel peut être raccordée par exemple une bâche (26) en matière résistante aux intempéries ou une pluralité d'éléments de paroi pouvant être accouplés de manière articulée,
le châssis (24) à toit rabattable comportant une pluralité de chariots (30) qui peuvent être déplacés le long d'au moins un guide (32, 38),
le guide comprenant un élément porteur longitudinal (32) le long duquel les chariots (30) peuvent être déplacés,
**caractérisée en ce**
**que** l'élément porteur longitudinal (32) est disposé de manière réglable au moins par portions dans une direction (y) transversale à la direction de déplacement (x) des chariots (30).

2. Structure ouvrante selon la revendication 1, **caractérisée en ce que** l'élément porteur longitudinal (32) est un profilé allongé tel qu'une glissière.

3. Structure ouvrante selon l'une des revendications précédentes, **caractérisée en ce que** le guide comprend un cadre de support (38; 138; 238; 538; 638).

4. Structure ouvrante selon la revendication 3, **caractérisée en ce que** l'un parmi la sous-structure (12; 14) et l'élément porteur longitudinal (32) est relié au cadre de support (38; 138; 238; 538; 638) et que l'autre parmi la sous-structure (12; 14) et l'élément porteur longitudinal (32) est accouplé au cadre de support (38; 138; 238; 538; 638) de manière réglable dans une direction (y) transversale à la direction de déplacement (x) des chariot (30).

5. Structure ouvrante selon la revendication 3 ou 4, **caractérisée en ce que** l'élément porteur longitudinal (32) est reçu dans le cadre de support (38; 138; 238).

6. Structure ouvrante selon la revendication 3 ou 4, **caractérisée en ce que** le cadre de support (538; 638) est raccordé de manière réglable à la sous-structure (12).

7. Structure ouvrante selon l'une des revendications 3 à 6, **caractérisée en ce que** le cadre de support (38; 538) est fixé à la sous-structure (12) ou à l'élément porteur longitudinal (32) ou est conçu avec celui-ci.

8. Structure ouvrante selon l'une des revendications 3 à 7, **caractérisée en ce que** le cadre de support (38) est relié à l'élément porteur longitudinal (32) ou à la sous-structure (12) par l'intermédiaire d'une pièce d'accouplement (46; 46a; 60; 260; 646) permettant un mouvement relatif.

9. Structure ouvrante selon la revendication 8, **caractérisée en ce que** la pièce d'accouplement est un boulon (46; 646) qui est fixé au cadre de support (38; 638) et le long duquel l'élément porteur longitudinal (32) est réglable.

10. Structure ouvrante selon la revendication 8, **caractérisée en ce que** la pièce d'accouplement est une biellette (60; 260) qui est reliée de manière articulée au cadre de support (138; 238) et reliée de manière articulée à l'élément porteur longitudinal (32).

11. Structure ouvrante selon la revendication 8, **caractérisée en ce que** la pièce d'accouplement est une saillie qui est prévue sur l'un parmi le cadre de support (38) et l'élément porteur longitudinal (32) et qui est insérée de manière coulissante dans une rainure de l'autre parmi le cadre de support (38) et l'élément porteur longitudinal (32).

12. Structure ouvrante selon la revendication 8, **caractérisée en ce que** la pièce d'accouplement est un élément roulant ou un élément coulissant prévu sur l'un parmi le cadre de support (38) et l'élément porteur longitudinal (32).

13. Structure ouvrante selon la revendication 8, **caractérisée en ce que** la pièce d'accouplement est un boulon (46) qui est fixé au cadre de support (538) et qui est réglable par rapport à la sous-structure (12; 14), notamment à travers un alésage ménagé dans la sous-structure (12; 14).

14. Structure ouvrante selon la revendication 8, **caractérisée en ce que** la pièce d'accouplement est un boulon (46a; 646) qui est fixé à la sous-structure (12; 14) et par rapport auquel le cadre de support (538; 638) est réglable, notamment au moyen d'un alésage ménagé dans le cadre de support (538; 638).

15. Structure ouvrante selon la revendication 8, **caractérisée en ce que** la pièce d'accouplement est un écrou qui est prévu sur l'un parmi le cadre de support (38) et l'élément porteur longitudinal (32) et qui est déplaçable axialement sur une broche filetée ou une tige filetée à billes qui est prévue sur l'autre parmi le cadre de support (38) et l'élément porteur longitudinal (32).

16. Structure ouvrante selon l'une des revendications 8 à 15, **caractérisée en ce que** la pièce d'accouplement est sollicitée par au moins un dispositif de précontrainte dans un sens de réglage, ou un sens opposé, de l'élément porteur longitudinal (32).

17. Structure ouvrante selon l'une des revendications 3 à 16, **caractérisée en ce que** le cadre de support (38) s'engage par-dessus au moins une portion de l'élément porteur longitudinal (32) et empêche ainsi le soulèvement de l'élément porteur longitudinal (32) de la sous-structure (12).

18. Structure ouvrante selon l'une des revendications précédentes, **caractérisée en ce que** l'élément porteur longitudinal (32) est précontraint dans une position initiale par au moins un élément à ressort (54).

19. Structure ouvrante selon la revendication 18, **caractérisée en ce qu'**un élément à ressort (54) est disposé de chaque côté de l'élément porteur longitudinal (32), et que l'élément porteur longitudinal (32) est précontraint par les éléments à ressort (54) en direction d'une position initiale préréglée.

20. Structure ouvrante selon l'une des revendications précédentes, **caractérisée en ce que** la direction transversale à la direction de déplacement (x) des chariots (30) comprend une composante horizontale (y) et/ou une composante verticale (z).

21. Structure ouvrante selon l'une des revendications précédentes, **caractérisée en ce que** l'élément porteur longitudinal (32) comporte au moins une piste destinée à un galet de support (50), recevant des forces verticales, du chariot (30) et au moins une piste destinée à un galet de guidage (52), recevant des forces horizontales, du chariot (30), et que la force est transmise par le déplacement des chariots (30) le long des éléments porteurs longitudinaux (32) afin de régler les éléments porteurs longitudinaux (32).

22. Véhicule utilitaire, conteneur ou structure en forme de cuve contenant une structure ouvrante (10) selon l'une quelconque des revendications précédentes.

23. Procédé de déplacement d'une structure ouvrante (10), en particulier un toit ouvrant, une paroi latérale ouvrante ou un élément de recouvrement ouvrant, procédé
dans lequel un premier élément de guidage (32) et un deuxième élément de guidage (32) sont disposés sur une sous-structure (12),
dans lequel des parties (30) d'un châssis (24) de la structure (10) peuvent être déplacées le long d'un des éléments de guidage (32) dans une direction de déplacement primaire (x) afin de libérer ou de fermer une ouverture de la sous-structure (12),
**caractérisé en ce**
**que** les éléments de guidage (32) sont réglables indépendamment les uns des autres dans une direction d'évitement (y) transversale à la direction de déplacement primaire (x).
